# EUROPEAN PATENT APPLICATION

(11) **EP 3 142 055 A1**
(43) Date of publication of application: **15.03.2017**
(21) Application number: 16187856.6
(22) Date of filing: 08.09.2016
(51) Int. Cl.: G06Q 20/32, G06Q 20/12, G06Q 20/02, G06Q 20/40, G06Q 20/38

(54) **WEB BASED PAYMENT SERVICE PROVIDING APPARATUS, METHOD, SYSTEM, AND NON-TRANSITORY COMPUTER READABLE STORAGE MEDIUM STORING COMPUTER PROGRAM RECORDED THEREON**

(30) Priority: 08.09.2015 KR 20150127131; 08.09.2015 KR 20150127132; 08.09.2015 KR 20150127133; 08.09.2015 KR 20150127134
(71) Applicant: SK Planet Co., Ltd., Seongnam-si, Gyeonggi-do 463-400 (KR)
(72) Inventor: KWAK, Sebyung, 02785 Seoul (KR); LEE, Joowon, 01913 Seoul (KR); KANG, Hyeongmoon, 07437 Seoul (KR)
(74) Representative: Thorniley, Peter

(57) **Abstract**

Provided are a web based payment service providing apparatus, method, and system which support to select a plurality of limits and a non-transitory computer readable storage medium storing a computer program recorded thereon and more particularly, to a web based payment service providing apparatus, method, and system, and a non-transitory computer readable storage medium storing a computer program recorded thereon which set a plurality of PINs for a single payment means in a web based simple payment configured to allow non-face-to-face payment in a web standard environment and set different limits corresponding to the PINs, thereby satisfying both the payment convenience and security.

## Description

### CROSS-REFERENCE TO RELATED APPLICATION

This application claims the benefit of Korean Application Nos. 10-2015-0127131, 10-2015-0127132, 10-2015-0127133 and 10-2015-0127134 filed on September 8, 2015, with the Korean Intellectual Property Office, the disclosure of which is incorporated herein by reference.

### BACKGROUND OF THE INVENTION

### 1. Field of the Invention

The present invention relates to a web based payment service providing apparatus, method, system, and a non-transitory computer readable storage medium storing a computer program recorded thereon. More particularly, the present invention relates to a web based payment service providing apparatus, method, system, and a non-transitory computer readable storage medium storing a computer program recorded thereon which set a plurality of PINs for a single payment means in a web based simple payment configured to allow a non-face-to-face payment in a web standard environment and vary limits corresponding to the PINs, thereby satisfying both payment convenience and security.

### 2. Description of the Related Art

In accordance with development of a mobile communication technique, a wireless device such as a mobile phone or a personal digital assistant (PDA) is explosively used and a service performed in a wired internet environment is gradually shifted to a wireless internet based service.

As the wireless network is invigorated, various services using many wired/wireless networks are being provided in business and service fields. For example, mobile-commerce (M-commerce) which is a mobile electronic commercial transaction is an example of wireless network based commercial transaction services.

In order to perform non-face-to-face commercial transaction, a procedure of paying a cost through a personal authentication procedure and a payment procedure is required. An on-line payment method through authentication and payment procedures of the related art is a method which makes a payment through an individual authentication method such as a credit card number or a phone bill. According to the payment method of the related art, a payment server does not save payment information such as credit card or account transfer. Therefore, the payment server uses safe-click or an IPS credit card payment. In the case of simple payment, the payment is performed based on a virtual card by agreement of a credit card company/account transfer company. The simple payment providing method is also mainly provided based on a web. However, a common standardized method for on-line commercial transaction has not been provided.

In the meantime, generally, when a payment method of the related art is used, a single payment limit is set for one credit card. If a user wants to increase the payment limit of the credit card, the user needs to contact the card company to change the setting, which is very complicated.

### [Related Art Document]

### [Patent Document]

Korean Registered Patent No. 10-0706894 (entitled: Method for controlling use of smart card in mobile terminal by using deferred payment limit stored in IC chip of smart card and mobile terminal, and deferred payment limit management system for the same)

### SUMMARY OF THE INVENTION

An object of the present invention is to provide a web based payment service providing apparatus, method, system, and a non-transitory computer readable storage medium having a computer program recorded thereon which provide a web based authenticated payment method for non-face-to-face payment in a web standard environment and register a plurality of PINs for a single payment means and set different payment limits for every PIN so that PINs having different security levels are used according to payment contents to lower a PIN leakage risk for a high limit and increase input convenience by making a configuration of a PIN having a low limit simple.

Another object of the present invention is to provide a web based payment service providing apparatus, method, system, and a non-transitory computer readable storage medium storing a computer program recorded thereon which provide security for various intrusion types which are caused during the payment by the user equipment.

Another object of the present invention is to provide a web based payment service providing apparatus, method, system, and a non-transitory computer readable storage medium storing a computer program recorded thereon which provide a web based authenticated payment method for non-face-to-face payment in a web standard environment and also support to perform authentication based on PIN input and a signature to support to perform authentication having different weights, perform authentication using a PIN for a payment of a predetermined amount or lower using a payment means such as a credit card and perform authentication using the PIN and signature for a payment which exceeds a reference amount, and perform authentication using a signature for a payment of a limited cost such as a coupon or a gift certificate so as to perform simple payment through a simple user authentication procedure without exposing an important PIN for the payment having a low weight for authentication.

Another object of the present invention is to provide a web based payment service providing apparatus, method, system, and a non-transitory computer readable storage medium storing a computer program recorded thereon which attach a signature onto a payment log or an electronic receipt to provide a follow-up checking function.

Another object of the present invention is to provide a web based payment service providing apparatus, method, system, and a non-transitory computer readable storage medium storing a computer program recorded thereon which support to determine a counterfeit payment based on a plurality of information blocks divided for payment information security in accordance with simple payment.

Another object of the present invention is to provide a web based payment service providing apparatus, method, system, and a non-transitory computer readable storage medium storing a computer program recorded thereon which, when a web based authenticated payment method is provided for a non-face-to-face payment in a web standard environment, determine a counterfeit payment based on a plurality of divided information blocks and encrypt a plurality of payment means registered by the user using a PIN designated by the user, and select the payment means at one time only by inputting the PIN to make a payment, thereby minimizing user input to provide a simple payment system.

Another object of the present invention is to provide a web based payment service providing apparatus, method, system, and a non-transitory computer readable storage medium storing a computer program recorded thereon which when a web based authenticated payment method is provided for a non-face-to-face payment in a web standard environment, determine a counterfeit payment based on a plurality of divided information blocks and verify whether transaction corresponding to the payment is actually generated when the payment is performed based on the PIN of the user, thereby securing stability and security of the payment.

According to an aspect of the present invention, a web based payment service providing apparatus includes a card approval requesting device implemented to encrypt and store a credit card number, encrypts a credit card authentication value to divide the credit card authentication value into an information block 1 and an information block 2, the information block 1 being used to decode the information block 2, transmit the information block 1 to a user authenticating device and delete the information block 1; and a user authenticating device implemented to receive a plurality of different payment personal identification number (PIN) information and setting information in which payment limits corresponding to each payment PIN information are set, from user equipment, encrypt the information block 1 based on each payment PIN information and store a plurality of encrypted information blocks 1 in which different payment limits generated by setting a payment limit corresponding to payment PIN information used to encrypt based on the setting information are set, request the payment PIN information for generating the information block 1 to the user equipment at the time of receiving payment information for a temporary virtual card number and payment statements from a web based commercial transaction device in which commercial transaction is generated by the user to determine whether the payment is available by comparing a payment limit set in the encrypted information block 1 which is decoded based on the payment PIN information received from the user equipment and a payment amount according to the payment information, and transmit the information block 1 which is decoded based on the payment PIN information received from the user equipment when the payment is available, to the card approval requesting device.

In an embodiment of the present invention, the card approval requesting device may be implemented to decode the information block 2 based on the information block 1 to decode the encrypted credit card authentication value based on the information block 1 and the information block 2 and decode the encrypted credit card number, generate an approval message to be transmitted to a credit card company based on the credit card authentication value and the credit card number, and transmit the approval message to the credit card company.

In an embodiment of the present invention, the credit card number may be encrypted based on a hardware security module (HSM) and a hash, the credit card authentication value may be encrypted based on the HSM, and the information block 1 may be encrypted through an advanced encryption standard (AES) based on the payment PIN information in the user authenticating device.

In an embodiment of the present invention, the card approval requesting device may receive the credit card number and the credit card authentication value from the user equipment through a member joining procedure.

In an embodiment of the present invention, when the payment is not available as a result depending on whether the payment is available, the user authenticating device may request another payment PIN information to the user equipment.

In an embodiment of the present invention, the user authenticating device may use a code having a part of digits selected in accordance with the selection of the user equipment among a plurality of digits which configures the payment PIN information corresponding to the highest payment limit based on the setting information as another payment PIN information in which a different payment limit is set.

According to another aspect of the present invention, a web based payment service providing method which supports to select a plurality of limits includes encrypting and storing a credit card number and encrypting a credit card authentication value to be divided into an information block 1 and an information block 2 and then transmit the information block 1 to a user authenticating device and delete the information block 1, by means of a card approval requesting device, the information block 1 being used to decode the information block 2; and receiving a plurality of different payment personal identification number (PIN) information and setting information in which a payment limit corresponding to the payment PIN information is set from user equipment, encrypting the information block 1 based on the payment PIN information and setting a payment limit corresponding to the payment PIN information used for encryption based on the setting information, by means of the user authenticating device, to generate and store a plurality of encrypted information block 1 in which different payment limits are set; requesting payment PIN information for generating the information block 1 to the user equipment at the time of receiving payment information for a temporary virtual card number and payment statements from a web based commercial transaction device in which commercial transaction is generated by the user, by means of the user authenticating device, to determine whether the payment is available by comparing a payment limit set in the encrypted information block 1 which is decoded based on the payment PIN information received from the user equipment and a payment amount according to the payment information, and transmitting the information block 1 which is decoded based on the payment PIN information received from the user equipment when the payment is available to the card approval requesting device, by means of the user authenticating device.

In an embodiment of the present invention, the web based payment service providing method which supports to select a plurality of limits may further include decoding the information block 2 based on the information block 1, by means of the card approval requesting device, to decode the encrypted credit card authentication value based on the information block 1 and the information block 2 and decode the encrypted credit card number; and generating an approval message to be transmitted to a credit card company based on the decoded credit card authentication value and the credit card number and transmitting the approval message to the credit card company, by means of the card approval requesting device.

According to yet another aspect of the present invention, a computer program executing the above-described web based payment service providing method which supports to select a plurality of limits may be stored in a non-transitory computer readable storage medium storing a computer program recorded thereon.

According to still another aspect of the present invention, a web based payment service providing system which supports to select a plurality of limits includes: user equipment which transmits a credit card number and a credit card authentication value through a member joining procedure; a web based commercial transaction device which generates and transmits a temporary virtual card number and information on payment statements when commercial transaction is generated by the user equipment; and a payment service providing apparatus which encrypts and stores a credit card number received from the user equipment and encrypting a credit card authentication value to be divided into an information block 1 and an information block 2, the information block 1 being used to decode the information block 2, and stores different information blocks 1 which are encrypted based on payment personal identification number (PIN) information using a plurality of different payment PIN information received from user equipment, sets different payment limits for encrypted information blocks 1 based on setting information received from the user equipment, requests payment PIN information for generating the information block 1 to the user equipment at the time of receiving payment information for a temporary virtual card number and payment statements from the web based commercial transaction device to determine whether the payment is available by comparing a payment limit set in the encrypted information block 1 which is decoded by the payment PIN information received therethrough and a payment amount according to the payment information, and performs payment by decoding the credit card authentication value encrypted based on the information block 1 decoded based on the payment PIN information received from the user equipment and the information block 2 decoded based on the information block 1 and decoding the encrypted credit card number when the payment is available.

According to the present invention, a web based authenticated payment method for non-face-to-face payment in a web standard environment is provided and different PINs are set according to different payment limits for a single payment means and different limits are applied through the PIN input information. Further, a PIN for a small amount payment limit is simply set, so that payment convenience for a small amount is enhanced and exposure of the entire PIN for a general limit which is higher than the small amount payment limit is reduced, thereby enhancing the security.

Further, according to the present invention, to a client, payment convenience and safety payment are provided and a payment service which satisfies the global web standard is provided so that the payment may be performed based on the payment service according to an exemplary embodiment of the present invention in other countries and various intrusion types generated at the time of making a payment in the user equipment are suppressed, thereby providing high security.

Further, according to the present invention, a web based authenticated payment method for non-face-to-face payment in a web standard environment is provided. When a high security level is required according to the type of the payment means and a predetermined reference amount, such as a credit card or check card, the authentication is performed through the payment PIN and when the payment amount exceeds the reference amount, additional authentication is performed through a signature of the user, so that the security in accordance with the payment process is enhanced. Further, as for the payment performed within a limited payment range, such as a coupon, a gift certificate, a point card, or a prepaid card, the payment processing is performed only by the personal authentication of the user through the signature information of the user, so that the payment PIN is not exposed and the payment convenience is also secured.

According to the present invention, credit card related information is exchanged between the payment service providing apparatus and a server of the card company so that the transmission/reception of the payment information is minimized during on-line authentication payment and credit card related information is divided into a plurality of information blocks to be managed, thereby significantly improving the security.

Further, according to the present invention, the signature is attached to the payment log or an electronic receipt, so that post-checking function is provided.

Further, according to the present invention, a web based authenticated payment method for non-face-to-face payment in a web standard environment is provided, information corresponding to each payment means is encrypted based on a PIN designated for one or more payment means which are registered by the user to be used for the payment, and a payment means which the user wants to use for payment is automatically selected only by the payment PIN received by the user input to make a payment. Therefore, the user input at the time of payment is minimized, so that payment convenience of the user is significantly improved.

Furthermore, according to the present invention, a web based authenticated payment method for non-face-to-face payment in a web standard environment is provided and a card approval requesting device verifies the transaction based on information received from the web based commercial transaction device and the user equipment through one-way channel to check whether an actual transaction is performed and then decodes a credit card related information. Therefore, even though the user authenticating device is hacked to leak the payment PIN, safe payment is supported, so that security for the entire payment system is enhanced.

Further, according to the present invention, one way channel is configured between a credit card requesting device and other devices so that a hacking threat of the credit card requesting device in which credit card related information is stored is minimized, thereby enhancing security.

### BRIEF DESCRIPTION OF DRAWINGS

FIG. 1 is a view of a configuration environment of a web based payment service providing system according to an exemplary embodiment of the present invention.
FIG. 2 is a conceptual view of an operation of a payment service providing apparatus which configures a web based payment service providing system.
FIG. 3 is a conceptual view illustrating a user member joining procedure according to an exemplary embodiment of the present invention.
FIG. 4 is a flowchart illustrating a user member joining procedure according to an exemplary embodiment of the present invention.
FIG. 5 is a conceptual view of a method for encrypting a card number and a card authentication value in a card approval requesting device and a user authenticating device according to a first exemplary embodiment of the present invention.
FIG. 6 is a conceptual view of a method for encrypting a card number and a card authentication value in a card approval requesting device and a user authenticating device according to a second exemplary embodiment of the present invention.
FIGS. 7 and 8 are conceptual views of an operation of a method for encrypting a card number and a card authentication value for every payment means and a method for automatically selecting a payment means in accordance with a payment PIN reception from user equipment in a card approval requesting device and a user authenticating device according to a third exemplary embodiment of the present invention.
FIG. 9 is a conceptual view of an operation of a method for encrypting a card number and a card authentication value and a transaction verifying method in a card approval requesting device and a user authenticating device according to a fourth exemplary embodiment of the present invention.
FIG. 10 is a flowchart illustrating a payment procedure in accordance with input of a payment PIN of the payment service providing apparatus according to a first exemplary embodiment of the present invention when a web based commercial transaction is generated by a user.
FIG. 11 is a flowchart illustrating a payment procedure of the payment service providing apparatus according to the second exemplary embodiment of the present invention when a web based commercial transaction is generated by a user.
FIG. 12 is a flowchart illustrating a payment procedure of the payment service providing apparatus according to a second exemplary embodiment of the present invention when a web based commercial transaction is generated by a user.
FIG. 13 is a flowchart illustrating a payment procedure in accordance with input of a payment PIN of the payment service providing apparatus according to a third exemplary embodiment of the present invention when a web based commercial transaction is generated by a user.
FIG. 14 is a flowchart illustrating a payment procedure in accordance with input of a payment PIN of the payment service providing apparatus according to a fourth exemplary embodiment of the present invention when a web based commercial transaction is generated by a user.
FIG. 15 is a conceptual view illustrating a payment procedure in accordance with payment PIN input according to an exemplary embodiment of the present invention.
FIG. 16 is an exemplary view of different payment PIN configurations in accordance with setting information of a payment service providing apparatus according to an exemplary embodiment of the present invention.
FIG. 17 is a conceptual view illustrating a payment procedure in accordance with transaction verification according to a fourth exemplary embodiment of the present invention.

### DETAILED DESCRIPTION OF THE PREFERRED EMBODIMENT

It is noted that technical terms used in the present invention are used to just describe a specific embodiment and do not intend to limit the present invention. Further, if the technical terms used in the present invention are not particularly defined as other meanings in the present invention, the technical terms should be appreciated as meanings generally appreciated by those skilled in the art and should not be appreciated as excessively comprehensive meanings or excessively reduced meanings. Further, when the technical term used in the present invention is a wrong technical term that does not accurately express the spirit of the present invention, the technical term should be understood by being substituted by a technical term which can be correctly understood by those skilled in the art. In addition, a general term used in the present invention should be interpreted as defined in a dictionary or contextually, and should not be interpreted as an excessively reduced meaning.

In addition, singular expressions used in the present invention include plurals expressions unless they have definitely opposite meanings. In the present invention, it should not analyzed that a term such as "comprising" or "including" particularly includes various components or various steps disclosed in the specification and some component or some steps among them may be not included or additional components or steps may be further included.

In addition, terms including ordinal numbers, such as 'first' and 'second', used in the present invention can be used to describe various components, but the components should not be limited by the terms. The above terms are used only to discriminate one component from the other components. For example, a first component may be named a second component and similarly, the second component may also be named the first component, without departing from the scope of the present invention.

Hereinafter, preferable exemplary embodiment of the present invention will be described in more detail with reference to the accompanying drawings. Like reference numerals refer to like elements for easy overall understanding and a duplicated description of like elements will be omitted.

Further, in the following description, a detailed explanation of known related technologies may be omitted to avoid unnecessarily obscuring the subject matter of the present invention. Further, it is noted that the accompanying drawings are only for easily understanding the spirit of the present invention and it should not be interpreted that the spirit of the present invention is limited by the accompanying drawings.

Hereinafter, exemplary embodiments according to the present disclosure will be described in detail with reference to the accompanying drawings, and the same or similar components are denoted by the same reference numerals regardless of reference numerals, and repeated description thereof will be omitted.

In describing the present disclosure, when it is determined that a detailed description of a related publicly known technology may obscure the gist of the present disclosure, the detailed description thereof will be omitted. Further, it is noted that the accompanying drawings are used just for easily appreciating the spirit of the present disclosure and it should not be interpreted that the spirit of the present disclosure is limited by the accompanying drawings.

According to a network based payment method of the related art, since a payment server does not store payment information, it is inconvenient to input the payment information every time. In the case of simple payment of the related art, when a payment company makes a payment based on a virtual card number, it is inconvenient because the payment needs to be performed by defining a payment standard through exclusive line connection with a separate card company. Further, it takes lots of time to interlock with all issuers such as a card company and a bank, so that it is difficult to spread the service.

Hereinafter, according to an exemplary embodiment of the present invention, suggested are a payment service providing apparatus, system, and method which provide convenience and security of a client and satisfy a global web standard. Further, a payment service providing apparatus, system, and method which set a plurality of payment limits corresponding to a single payment means in a web based payment environment to increase security and improve payment convenience will be disclosed.

Further, according to an exemplary embodiment of the present invention, disclosed are a payment service providing apparatus, system, and method which configure different authenticating processes according to a type of a payment means and a weight of a payment amount in a web based payment environment, thereby increasing security and improving payment convenience.

Further, according to an exemplary embodiment of the present invention, suggested are a payment service providing apparatus, a system, and method which provide convenience and security of the client and satisfy a global web standard. Further, disclosed are a payment service providing apparatus, system, and method which verify a transaction performed by a user and then complete the payment using a payment PIN in order to prevent the payment PIN of a user which is used for payment in a web based payment environment from being leaked due to external hacking to be illegally used, thereby enhancing security.

Web standard refers to an international web standard technique which is established for compatibility between various types of operating environments without according to a specific terminal operating environment (for example, ActiveX, Java, or Adobe Air) nor installing separate Plug-in.

For example, the web standard may be a next-generation open type technology such as HTML5 established in World Wide Web Consortium (W3C).

Hereinafter, a meaning of the web standard disclosed in the exemplary embodiment of the present invention is not limited to a HTML5 standard technology, but may include various web driving technologies such as DOM or JavaScript to secure compatibility between various types of operating environments.

Hereinafter, according to a web based payment service providing apparatus, system, and method according to an exemplary embodiment of the present invention which support to select a plurality of limits, it is possible to improve inconvenience and risk to input sensitive personal information and payment information whenever on-line authenticated payment is performed while observing security required by domestic electronic financial transaction regulations in order to enhance convenience and security of the client.

Further, a web based payment service providing apparatus, system, and method according to an exemplary embodiment of the present invention which support to select a plurality of limits are payment services which satisfy a global standard, that is, a personal authenticated transaction (3D authenticated payment) which is generated by adding a personal authentication function to a general authenticated transaction (2D authenticated payment), thereby enhancing transaction stability.

Further, a web based payment service providing apparatus, system, and method according to an exemplary embodiment of the present invention which support to select a plurality of limits may provide a common process in which expandability and compatibility are considered to provide transaction authentication and approval service regardless of a platform or an operating system (OS) of a personal terminal.

Moreover, a web based payment service providing apparatus, system, and method according to an exemplary embodiment of the present invention which support to select a plurality of limits may register a plurality of PINs for a single payment means and set different payment limits for every PIN, to use PINs having different security levels according to payment contents, thereby lowering a risk of PIN leakage for a high limit and increasing input convenience by allowing a PIN having a low payment limit to have a relatively simple configuration.

Further, according to a payment service providing apparatus, system, and method according to an exemplary embodiment of the present invention which support web based multiple authentication, when a user makes a payment through a web based commercial transaction device, different authentication methods are allowed by performing authentication based on a signature in addition to PIN input based on different authentication methods which are set in advance corresponding to a type of payment means and a reference amount. Therefore, when a payment for a reference amount or lower is performed using a payment means such as a credit card, the authentication is performed using PIN. Further, when a payment for a reference amount or more is performed, authentication is performed using a PIN and a signature. Furthermore, when a payment for a limited amount using a payment means such as a coupon, a point card, a gift certificate, or a prepaid card is performed, simple payment is supported by performing the authentication using a signature. Therefore, as for a payment having a low level of importance, simple user authentication process is performed without exposing the important PIN.

Further, a payment service providing apparatus, system, and method according to an exemplary embodiment of the present invention using web based authentication which encrypt information corresponding to one or more payment means which are registered by a user to use for a payment based on a PIN designated for every payment means, support to automatically select a payment means which the user wants to use for payment just by inputting the PIN, thereby minimizing the user input when the user makes a payment to significantly improve payment convenience.

Further, a payment service providing apparatus, system, and method according to an exemplary embodiment of the present invention which support web based commercial transaction verification may prevent a payment PIN of the user which is used to make a payment in a web based payment environment from being leaked due to external hacking to be illegally used.

Hereinafter, a web based payment service providing apparatus, system, and method according to an exemplary embodiment of the present invention will be described in detail.

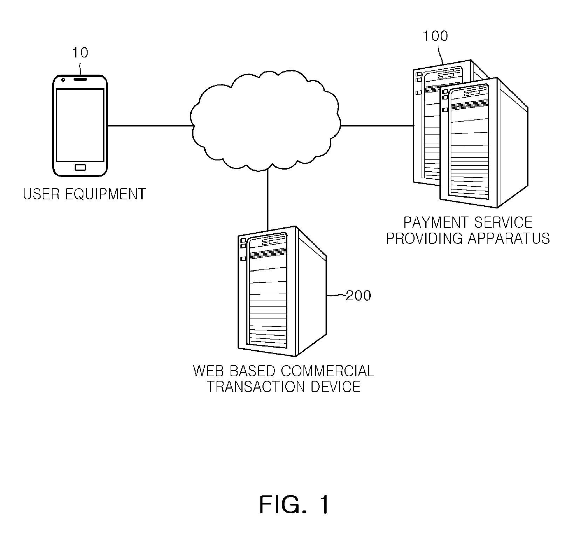

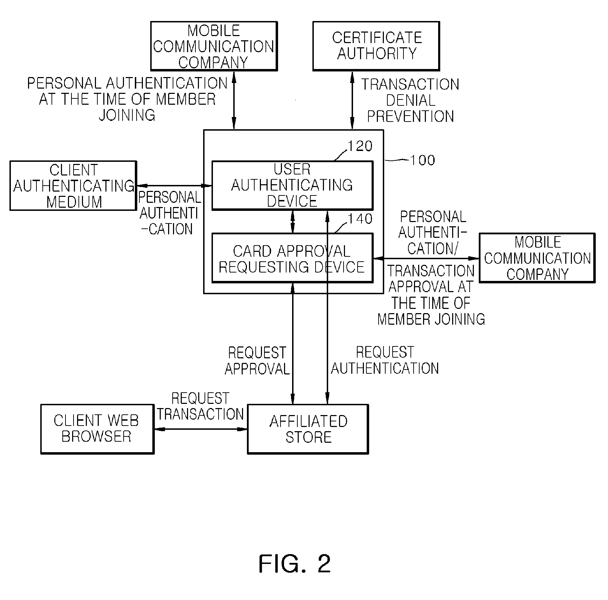

FIG. 1 is a view of a configuration environment of a web based payment service providing system according to an exemplary embodiment of the present invention which supports to select multiple limits and FIG. 2 is a conceptual view of an operation of a payment service providing apparatus which configures a web based payment service providing system which supports to select multiple limits.

As illustrated in FIG. 1, a configuration environment of a web based payment service providing system according to an exemplary embodiment of the present invention which supports to select multiple limits may include user equipment 10, a web based commercial transaction device 200, and a payment service providing apparatus 100, which are connected through a communications network.

In the meantime, when an operation process on a web based payment service which supports to select multiple limits is described with reference to FIG. 2, the payment service providing apparatus 100 may be implemented by a configuration including separate lower level devices which are physically divided.

That is, the payment service providing apparatus 100 may include a card approval requesting device 140 and a user authenticating device 120.

The card approval requesting device 140 may be a server for performing authenticated transaction with a credit card company.

The user authenticating device 120 may be a server which performs self-authentication of the user. When the user joins in an affiliated store, the user authenticating device 120 may perform personal authentication through a mobile phone identification service (SMS-OTP) of a mobile communication company.

Further, the user authenticating device 120 may receive card information from the user through a web browser and receive, store, and manage a personal identification number (PIN).

Specifically, the user authenticating device 120 may perform the following operations.

The user authenticating device 120 may perform personal authentication of a mobile communication company or I-PIN personal authentication based on personal information (a name, a birth date, a gender, a nationality, a phone number, a mobile communication company, an e-mail address) of a user which is received through a web browser during a member joining process of the user. Connecting information (CI)/duplication information (DI) personal information which is received as a result of personal authentication may be encrypted to be stored and managed in a database of the user authenticating device 120.

Further, the user authenticating device 120 encrypts transaction proceeding environment information (access internet protocol (IP), location information, or a user agent), transaction contents (details of transaction), member information, or payment information to be stored in the database.

When the user logs in the user authenticating device 120, the user authenticating device 120 extracts card information (card ID) which is already registered by the user and encrypts the card information with a temporarily generated encryption key to generate a temporary virtual card number.

Further, the user authenticating device 120 encrypts such as transaction proceeding environment information (access internet protocol (IP), location information, or a user agent), transaction contents (details of transaction), member information, or payment information to be stored in the database.

Further, the user authenticating device 120 may encrypt and store an information block 1 (one information block between two information obtained by obfuscating an authentication value required to approve the credit card which is registered in a card approval requesting device 140 by the user to be divided into two information) transmitted from the card approval requesting device 140 based on a payment PIN input by the member.

Further, when the transaction approval is requested, the user authenticating device 120 may transmit the information block 1 which is decoded by the payment PIN input by the member to the card approval requesting device 140.

Specifically, the card approval requesting device 140 may perform the following operations.

When the user registers the credit card in the service, in order to evaluate validity of the credit card, information (a credit card number, an expiration date, first two digits of a credit card secret code, and birth date) required to authenticate the credit card to check whether to approve the card from the credit card company may be temporally transmitted to the card approval requesting device 140 using the user equipment 10.

When the card approval requesting device 140 confirms the validity of the credit card as a result of approval, information (for example, a credit card number) required to authenticate the credit card, like a general information processing procedure of VAN, is encrypted through a hardware security module (HSM) as hardware operates, and a corresponding card ID is generated to be stored in the card approval requesting device 140.

That is, the card approval requesting device 140 generates a unique card ID for the card number encrypted for every payment means and then may allocate (match) the card ID to the encrypted card number corresponding to each payment means.

In this case, the card authentication value including an expiration date, first two digits of a credit card secret code, and birth date among information required to authenticate the credit card or the check card is obfuscated and divided into two information blocks and each of two information blocks may be encrypted by separate HSM equipment.

When each of two information blocks is encrypted, a value generated as an HSM encryption result of the information block 1 may be used as an encryption key of an information block 2. Accordingly, consecutive encryption may be performed so as not to be accessible to the information block 2 without the information block 1.

The information block 1 of two generated information blocks is transmitted to the user authenticating device 120 and then the information block 1 may be deleted from the card approval requesting device 140.

Further, the card approval requesting device 140 may store the card ID and the information block 2 for every payment means by matching to each other and may transmit the card ID and the information block 1 for every payment means to the user authenticating device 120 by matching to each other.

By doing this, the user authenticating device 120 may match and store the card ID and the information block 1 for every payment means.

The user equipment for performing an authenticated payment method may perform authentication and payment procedures through a web browser. The web browser driven in the user equipment 10 is a browser which supports the web standard. The web browser receives an input value (for example, a PIN or a phone number) required to perform payment and authentication of the user and may transmit the input value to the user authenticating device 120 through a security channel (for example, a secure socket layer (SSL)).

An authenticated payment application for performing an authenticated payment method may be installed in the user equipment 10. For example, the authenticated payment application may be a JavaScript based Web App (Application) which provides a security of a non-face-to-face payment performed in the web browser.

In the authenticated payment application, an authenticated payment procedure based on new member joining, log-in, an authentication screen, and a payment screen may be performed. Further, input information from the user is processed and the authentication procedure and the payment procedure may be performed through the payment service providing apparatus 100.

The authenticated payment application may provide E2E security (section protection between a user and a server), virtual keyboard (protection of an input value of the user), and page obfuscation (data encryption of a web page) functions.

In the above configuration, the user authenticating device 120 requests a payment PIN to be used for making a payment to the user equipment 10 and may encrypt the payment PIN received from the user equipment for the information block 1 divided as illustrated in the drawing, based on an advanced encryption standard (AES), using received payment PIN as an encryption key.

In this case, the user authenticating device 120 may receive a plurality of payment PINs corresponding to different amounts of payment limit (hereinafter, payment limits) from the user equipment 10 and receive setting information for payment limits to be set correspondingly to each payment PIN from the user equipment 10.

For example, the user authenticating device 120 receives setting information in which a payment PIN 1 corresponding to a general payment limit (a total limit, a one-time payment limit, a daily payment limit, and the like), a payment PIN 2 corresponding to a small amount payment limit (a payment limit which is set to be lower than the general payment limit), and different payment limits corresponding to the payment PIN 1 and the payment PIN 2 are set from the user equipment 10. The user authenticating device 120 encrypts the information block 1 using the payment PIN 1 based on the AES to generate a first encryption information block 1 and encrypts the information block 1 using the payment PIN 2 based on the AES to generate a second encryption information block 1.

Further, the user authenticating device 120 sets a general payment limit to the first encryption information block 1 generated through the payment PIN 1 based on the setting information and set a small amount payment limit to the second encryption information block 1 generated through the payment PIN 2 to save the general payment limit and the small amount payment limit.

In this case, the user authenticating device 120 may assign a separate limit identifier to each encryption information block 1 and store matching information obtained by matching the payment limit corresponding to each limit identifier and the limit identifier in a database. Here, the limit identifier assigned when the information block 1 is encrypted may be also encrypted together with the information block 1.

Further, when the information block 1 is encrypted through the payment PIN, the user authenticating device 120 may encrypt the data on the payment limit together with the information block 1 to generate the information block 1 which is encrypted by setting the payment limit.

Therefore, the user authenticating device 120 encrypts the information block 1 using each payment PIN to generate and store different encrypted information blocks 1. Further, the user authenticating device 120 may set a payment limit corresponding to the payment PIN used to encrypt the information blocks 1 which are encrypted based on the setting information.

Thereafter, when a commercial transaction is performed through the web based commercial transaction device 200 by the user equipment 10, the user authenticating device 120 receives a temporary virtual card number and payment information on payment statement from the web based commercial transaction device 200 and may request the payment PIN for generating the information block 1 to the user equipment when the payment information is received.

Therefore, the user authenticating device 120 may receive the payment PIN from the user equipment 10 and discern an information block 1 which will be decoded by the received payment PIN, among a plurality of encrypted information blocks 1.

For example, when the payment PIN 2 is received from the user equipment 10, the user authenticating device 120 discerns the second encryption information block 1 which will be decoded by the payment PIN 2 and may confirm the small amount payment limit set in the second encrypted information block 1.

Thereafter, the user authenticating device 120 compares the confirmed payment limit with the payment statement according to the payment information and may determine whether payment is available depending on whether to exceed the payment limit. When the payment is available, the user authenticating device 120 may transmit the decoded information block 1 to the card approval requesting device.

In this case, the user authenticating device 120 decodes the temporary virtual card number included in the payment information and searches and extracts a card ID corresponding to the decoded temporary virtual card number. Further, the user authenticating device 120 may transmit the extracted card ID to the card approval requesting device 140 together with the decoded information block 1.

In the meantime, when the payment statement exceeds the checked payment limit, the user authenticating device 120 determines that the payment is unavailable and may request another payment PIN to the user equipment 10.

Further, the user authenticating device 120 transmits the information regarding whether the payment is available to the user equipment 10 and the web based commercial transaction device 200 to determine whether to proceed the payment.

In the meantime, the card approval requesting device 140 decodes the information block 2 based on the information block 1 received from the user authenticating device 120 and decodes the encrypted credit card authentication value based on the decoded information block 1 and information block 2, and may decode the encrypted credit card number corresponding to the card ID received from the user authenticating device 120. In this case, the card approval requesting device may decode the encrypted credit card number based on the HSM which is used to encrypt the credit card number.

Therefore, the card approval requesting device 140 generates an approval message which will be transmitted to a credit card company server based on the decoded credit card authentication value and the credit card number and may transmit the approval message to the credit card company server. Further, after receiving the approval result from the credit card company server, the card approval requesting device 140 transmits the approval result to the web based commercial transaction device 200 to complete the payment processing.

In this case, the card approval requesting device 140 receives the payment information provided by the web based commercial transaction device 200 from the user authenticating device 120 and may generate the approval message based on the payment information, the above-described credit card authentication value, and the credit card number. Here, the payment information provided from the user authenticating device 120 to the card approval requesting device 140 may include only information on payment statement.

As described above, according to the present invention, when the user requests the payment approval, the payment limit is easily selected only by using the payment PIN so that repeated usage of the payment PIN having a highest payment limit is minimized, to prevent the security threat due to the exposure of the payment PIN.

As described above, according to the present invention, credit card related information is exchanged between the payment service providing apparatus and a server of the card company so that the transmission/reception of the payment information is minimized during on-line authentication payment and credit card related information is divided into a plurality of information blocks to be managed, thereby significantly improving the security.

Further, differently from the payment processing system of the related art, according to the present invention, a plurality of payment limits is allowed for a single payment means, a plurality of payment limits is easily set only by the payment PIN and the payment limit is determined not by the card company server, but by the payment service providing apparatus. Therefore, convenience for a user to set a payment limit may be enhanced.

In this case, the present invention supports to set a PIN for the highest payment limit to have high complexity and support to set a PIN for a small amount payment limit to have low complexity, thereby significantly improving the payment convenience.

Further, the user authenticating device 120 may request signature information which will be used for the payment to the user equipment and store the signature information received from the user equipment in the database to be associated with the member information of the user.

Here, the signature information may be configured by a signature image of the signature of the user.

Further, the user authenticating device 120 encrypts the information block 1 using a payment PIN to generate an encrypted information block 1 and matches the encrypted information block 1 and the member information of the user to be stored in the database.

Thereafter, when the commercial transaction is generated through the web based commercial transaction device 200 by the user equipment 10, the user authenticating device 120 receives payment information on the payment means and the payment statement from the web based commercial transaction device 200. When the payment information is received, the user authenticating device 120 may perform the payment processing process after performing authentication by a predetermined authenticating method in accordance with the type of payment means and a predetermined reference amount.

For example, when the payment means in accordance with the payment information received from the web based commercial transaction device 200 is a credit card or a check card, the user authenticating device 120 extracts a temporary virtual card number from the payment information. When the payment amount according to the payment information exceeds a predetermined reference amount, the user authenticating device 120 may request the signature information and the payment PIN to the user equipment 10.

In this case, the user authenticating device 120 may request the signature information of the user to the web based commercial transaction device 200 and the web based commercial transaction device 200 may be configured by a point of sale (POS) device.

Thereafter, the user authenticating device 120 compares the signature information of the user received from the user equipment 10 or the web based commercial transaction device 200 with signature information which is stored in advance to authenticate the user. When the authentication is successfully performed, the user authenticating device decodes the encrypted information block 1 based on the payment PIN received from the user equipment 10 and when the decoding is successfully performed, may transmit the information block 1 to the card approval requesting device 140.

In this case, the user authenticating device 120 compares images of the signature information received from the user equipment 10 or the web based commercial transaction device 200 and signature information which is registered at the time of joining as a member and stored in advance and may determine that the authentication is successfully performed when images match by a predetermined reference or more.

In the meantime, when the payment means is a credit card or a check card, the user authenticating device 120 extracts a temporary virtual card number from the payment information and when the payment amount according to the payment information is equal to or lower than a predetermined reference amount, may request the payment PIN to the user equipment 10.

Therefore, the user authenticating device 120 omits an authenticating process through the signature information and may perform user authentication depending on whether to decode the encrypted information block 1 only by the payment PIN received to the user equipment 10. The user authenticating device 120 may transmit the decoded information block 1 to the card approval requesting device 140 depending on whether the authentication is successfully performed.

In the meantime, the payment information may include different information according to the type of payment means. When the payment means is the check card or the credit card, the payment information may be the above-described temporary virtual card number. When the payment means is a means other than the check card or the credit card, such as a coupon, a point card, a gift certificate, or a prepaid card, the payment information may be code information corresponding to any one of the coupon, the point card, the gift certificate, and the prepaid card.

Further, the web based commercial transaction device 200 may receive the temporary virtual card number or the code number from the user equipment 10 to generate payment information or recognize a barcode represented in the user equipment 10 to generate payment information including the code information.

Therefore, when the code information is included as information on the payment means included in the payment information, the user authenticating device 120 may directly process the payment amount according to the payment information based on code information which matches the code information stored correspondingly to the member information of the user.

In this case, the user authenticating device 120 may sell a payment means corresponding to the code information to the user through communication with the user equipment 10. The user authenticating device 120 may directly process payment for purchase of the payment means through a VAN company server, a card company server, a mobile communication company server, or the like. When the payment is completed, the user authenticating device 120 issues code information for the payment means and may store the code information by matching the member information of the user.

By doing this, the user authenticating device 120 may use the payment means corresponding to the code information to process the payment of the payment amount according to the payment information.

As described above, the payment service providing apparatus 100 may process using different authenticating methods according to the type of the payment means and the reference amounts. Therefore, the payment service providing apparatus 100 performs the user authentication and the payment processing using a signature and a PIN for the payment, which exceeds the reference amount, using a credit card or a check card, to increase the payment security. Further, the payment service providing apparatus 100 processes the payment just using the PIN for a payment which is equal to or lower than the reference amount, using the credit card or the check card, to increase payment convenience. Furthermore, the payment service providing apparatus 100 directly processes the payment just using the signature for a payment amount within a restricted limit such as a coupon, a point card, a gift certificate, or a prepaid card, to simplify the payment procedure, thereby providing the payment convenience.

In the meantime, as for the payment using the credit card or the check card, the user authenticating device 120 transmits the decoded information block 1 to the card approval requesting device 140 to proceed the subsequent payment processing procedure.

In this case, the user authenticating device 120 decodes the temporary virtual card number included in the payment information and searches and extracts a card ID corresponding to the decoded temporary virtual card number. Further, the user authenticating device 120 may transmit the extracted card ID to the card approval requesting device 140 together with the decoded information block 1.

In the meantime, the card approval requesting device 140 decodes the information block 2 based on the information block 1 received from the user authenticating device 120 and decodes the encrypted card authentication value based on the decoded information block 1 and information block 2, and may decode the encrypted card number corresponding to the card ID received from the user authenticating device 120. In this case, the card approval requesting device may decode the encrypted card number based on the HSM which is used to encrypt the card number.

Therefore, the card approval requesting device 140 generates an approval message which will be transmitted to a credit card company server based on the decoded card authentication value and the card number and may transmit the approval message to the credit card company server. Further, after receiving the approval result from the credit card company server, the card approval requesting device 140 transmits the approval result to the web based commercial transaction device 200 to complete the payment processing.

In this case, the card approval requesting device 140 receives the payment information provided by the web based commercial transaction device 200 from the user authenticating device 120 and may generate the approval message based on the payment information, the above-described card authentication value, and card number. Here, the payment information provided from the user authenticating device 120 to the card approval requesting device 140 may include only information on payment statement.

As described above, according to the present invention, when a high security level is required according to the type of the payment means and a predetermined reference amount, such as a credit card or check card, the authentication is performed through the payment PIN and when the payment amount exceeds the reference amount, additional authentication is performed through a signature of the user, so that the security in accordance with the payment process is enhanced.

Further, as for the payment performed within a limited payment range, such as a coupon, a point card, a gift certificate, or a prepaid card, the payment processing is performed only by the personal authentication of the user through the signature information of the user, so that the payment PIN is not exposed while securing the payment convenience. Therefore, the security may be provided.

Furthermore, according to the present invention, credit card related information are exchanged between the payment service providing apparatus and a server of the card company so that the transmission/reception of the payment information is minimized during on-line authentication payment and credit card related information is divided into a plurality of information blocks to be managed, thereby significantly improving the security.

Further, the payment PINs corresponding to different payment means may have different configurations. When a payment PIN for any one of payment means received from the user equipment 10 is equal to (matches) a payment PIN for the other payment means received from the user equipment, the user authenticating device 120 may transmit notice information to the user equipment 10 to modify any one of the payment PINs.

Further, the user authenticating device 120 encrypts an information block 1 using the payment PIN for each payment means to generate an encrypted information block 1 and matches a card ID which matches the information block 1 to the encrypted information block 1 and matches the encrypted information block 1 and the card ID which match to each other for every payment means to the member information of the user to store the matching information in the database.

Thereafter, a commercial transaction is performed through the web based commercial transaction device 200 by the user equipment 10, the user authenticating device 120 receives the payment information on payment statement from the web based commercial transaction device 200 and may request the payment PIN to the user equipment 10.

In this case, the user authenticating device 120 may request the payment PIN to the web based commercial transaction device 200 or receive the payment PIN in accordance with the user input from the web based commercial transaction device 200 based on the user input through the web based commercial transaction device 200.

Thereafter, the user authenticating device 120 may decode any one of one or more encrypted information blocks 1 which are stored in advance based on the payment PIN received from the user equipment 10 or the web based commercial transaction device 200, automatically select payment means corresponding to the decoded information block 1, and transmit the decoded information block 1 and the card ID corresponding to the selected payment means to the card approval requesting device 140.

That is, when commercial transaction through the web based commercial transaction device 200 is performed, the user authenticating device 120 may automatically select the payment means desired by the user only using the payment PIN of the user received from the user equipment 10 or the web based commercial transaction device 200 and perform the payment processing based thereon.

Subsequent processes according to this will be described in more detail. The user authenticating device 120 transmits the decoded information block 1 and the card ID corresponding to the selected payment means which is automatically selected based on the payment PIN input by the user to the card approval requesting device 140 to perform the subsequent payment processing procedure.

In the meantime, the card approval requesting device 140 decodes the information block 2 corresponding to the selected payment means based on the information block 1 received from the user authenticating device 120 and decode the encrypted card authentication value corresponding to the selected payment means based on the decoded information block 1 and information block 2, and searches and extracts the encrypted card number corresponding to the card ID for the selected payment means received from the user authenticating device 120 together with the information block 1 to decode the encrypted card number. In this case, the card approval requesting device 140 may decode the encrypted card number based on the HSM which is used to encrypt the card number.

Therefore, the card approval requesting device 140 generates an approval message which will be transmitted to a credit card company server based on the card authentication value which is decoded correspondingly to the selected payment means and the card number and may transmit the approval message to the credit card company server. Further, after receiving the approval result from the credit card company server, the card approval requesting device 140 transmits the approval result to the web based commercial transaction device 200 to complete the payment processing using the selected payment means.

In this case, the card approval requesting device 140 receives the payment information provided by the web based commercial transaction device 200 from the user authenticating device 120 and may generate the approval message based on the payment information, the card authentication value corresponding to the selected payment means, and the card number.

As described above, when the user wants to select one of a plurality of payment means which is registered in the payment service to make a payment, the present invention supports to automatically select a payment means desired by the user just by inputting the payment PIN, thereby minimizing the user input required to make a payment, to significantly improve payment convenience of the user.

Further, a commercial transaction is performed through the web based commercial transaction device 200 by the user equipment 10, the user authenticating device 120 receives a temporary virtual card number and payment information on payment contents from the web based commercial transaction device 200 and may request the payment PIN for generating the information block 1 to the user equipment when the payment information is received.

Therefore, the user authenticating device 120 may receive the payment PIN from the user equipment 10 and decode the encrypted information block 1 based on payment PIN to transmit the decoded information block 1 to the card approval requesting device.

In this case, the user authenticating device 120 decodes the temporary virtual card number included in the payment information and searches and extracts a card ID corresponding to the decoded temporary virtual card number. Further, the user authenticating device 120 may transmit the extracted card ID to the card approval requesting device 140 together with the decoded information block 1.

In the meantime, the card approval requesting device 140 decodes the information block 2 based on the information block 1 received from the user authenticating device 120 and decodes the encrypted credit card authentication value based on the decoded information block 1 and information block 2, and may decode the encrypted credit card number corresponding to the card ID received from the user authenticating device 120. In this case, the card approval requesting device may decode the encrypted credit card number based on the HSM which is used to encrypt the credit card number.

Therefore, the card approval requesting device 140 generates an approval message which will be transmitted to a credit card company server based on the decoded credit card authentication value and the credit card number and may transmit the approval message to the credit card company server. Further, after receiving the approval result from the credit card company server, the card approval requesting device 140 transmits the approval result to the web based commercial transaction device 200 to complete the payment processing.

In this case, the card approval requesting device 140 receives the payment information provided by the web based commercial transaction device 200 from the user authenticating device 120 and may generate the approval message based on the payment information, the above-described credit card authentication value, and the credit card number. Here, the payment information provided from the user authenticating device 120 to the card approval requesting device 140 may include only information on payment statement.

In the above-described configuration, there is a problem in that when a hacker hacks the user authenticating device 120, the credit card approval requesting device 140 may be incapacitated. That is, when the hacker hacks the user authenticating device 120 to obtain the payment PIN and transmits the payment PIN to the user authenticating device 120 to pretend as if the payment is performed so that the user terminal inputs the payment PIN, the card approval requesting device 140 receives the information block 1 possessed by the user authenticating device 120 to decode the information block 2 possessed by itself and then generates entire payment information to approve the payment. Therefore, when the hacker hacks only the user authenticating device 120, the security level of the card approval requesting device 140 is automatically lowered.

Therefore, in order to solve the above-described problem, information which is not known by the user authenticating device 120 and variable information (time) are received by the card approval requesting device 140 to recheck the approval request requested by the user authenticating device 120.

For example, when web based payment is necessary, the card approval requesting device 140 may receive transaction confirmation information including a unique payment code and transaction date and time corresponding to the commercial transaction generated by the user through a channel through which only one-way communication is allowed, from the web based commercial transaction device 200.

In this case, when the payment information to be transmitted to the user authenticating device 120 is generated, the web based commercial transaction device 200 may simultaneously generate the transaction confirmation information corresponding to the payment information and transmit the transaction confirmation information to the card approval requesting device 140 simultaneously with the transmission of the payment information.

Further, the web based commercial transaction device 200 issues and may transmit transaction verification information which is the same information as the transaction confirmation information to the user equipment 10 which generates the commercial transaction.

By doing this, the card approval requesting device 140 may receive the transaction verification information through the channel through which only one-way communication is allowed, from the user equipment 10.

Thereafter, the card approval requesting device 140 compares the transaction confirmation information received from the web based commercial transaction device 200 and the transaction verification information received from the user equipment 10 and when the transaction confirmation information matches the transaction verification information, may confirm that the credit card approval request corresponding to the commercial transaction of the user which is requested by the user authenticating device 120 is legal.

By doing this, when it is confirmed that the transaction verification is normal through the comparison of the transaction confirmation information and the transaction verification information, the card approval requesting device 140 decodes the information block 2 based on the information block 1 to decode the credit card authentication value based on the information block 1 and the information block 2, decodes the encrypted credit card number to generate an approval message in accordance with the credit card authentication value, the credit card number, and the payment information to transmit the approval message to the credit card company server, thereby performing the payment processing.

As described above, according to the present invention, the card approval requesting device 140 decodes the credit card related information after performing the transaction verification based on the information received from the web based commercial transaction device 200 and the user equipment 10 through the one-way channel to check whether actual transaction is performed. Therefore, even though the user authenticating device 120 is hacked to leak the payment PIN, it is supported to safely perform the payment, thereby enhancing the security of the entire payment system.

Further, according to the present invention, the card approval requesting device 140 communicates with external devices only through one-way channel, so that hacking threat is minimized to enhance the security of the entire system.

In the meantime, in the above-described configuration, the user equipment 10 may include various terminals such as a smart phone equipped with a communication function, a portable terminal, a mobile terminal, a personal digital assistant (PDA), a portable multimedia player (PMP) terminal, a telematics terminal, a navigation terminal, a personal computer, a notebook computer, a slate PC, a tablet PC, an Ultrabook, a wearable device (for example, including a smart watch, a smart glass, or a head mounted display (HMD)), a Wibro terminal, an internet protocol television (IPTV) terminal, a smart TV, a digital broadcasting terminal, an audio video navigation (AVN) terminal, an audio/video (A/V) system, or a flexible terminal.

Further, an example of the above-described communication network may include a wireless communication network such as wireless LAN (WLAN), digital living network alliance (DLNA), wireless broadband (Wibro), world interoperability for microwave access (Wimax), global system for mobile communication (GSM), code division multi access (CDMA), code division multi access 2000 (CDMA2000), enhanced voice-data optimized or enhanced voice-data only (EV-DO), wideband CDMA (WCDMA), high speed downlink packet access (HSDPA), high speed uplink packet access (HSUPA), IEEE 802.16, long term evolution (LTE), long term evolution-advanced (LTE-A), wireless mobile broadband service (WMBS), Bluetooth, radio frequency identification (RFID), infrared data association (IrDA), ultra-wideband (UWB), ZigBee, near field communication (NFC), ultra sound communication (USC), visible light communication (VLC), Wi-Fi, or Wi-Fi direct and a wired communication network such as power line communication (PLC), USB communication, Ethernet, serial communication, or an optical/coaxial cable.

Further, the above-described payment service providing apparatus 100 and the web based commercial transaction device 200 may be implemented in a form of various servers such as a web server, a database server, and a proxy server.

Further, in the payment service providing apparatus 100 and the web based commercial transaction device 200, one or more of various software which allows a network load distribution mechanism or a service device to operate on the Internet or other networks may be installed, and as a result, the service providing device 200 may be implemented by a computerized system.

Further, the network may be an http network and may be a private line, Intranet, or any other networks. Furthermore, the payment service providing apparatus 100, the web based commercial transaction device 200 and the user equipment 10 may be connected to each other by a security network so as to suppress the data from being attacked by any hacker or other third parties. Further, the payment service providing apparatus 100 and the web based commercial transaction device 200 may include a plurality of database servers. The database server may be implemented to be separately connected with the service providing device, respectively, through any type of network connection including a distributed database server architecture.

In the meantime, the user equipment 10 may be configured by various components such as an input unit, a display unit, a communication unit, a storing unit, a voice output unit, and a control unit.

The input unit receives a signal according to a button operation of the user or any function selection, receives a command or a control signal created by an operation such as an operation of touching/scrolling the displayed screen, or receives a signal according to the information input by the user. The input unit may use various devices such as a key pad, a dome switch, a touch pad (a pressure resistive type/a capacitive resistive type), a touch screen, a jog wheel, a jog switch, a jog shuttle, a mouse, a stylus pen, and a touch pen.

Further, the display device may display various contents such as various menu screens using a user interface and/or graphic user interface stored in the storing unit, by the control of the control unit. Here, the contents displayed on the display unit may include a menu screen including various texts, image data (including various information data), and data such as icons, list menus, or a combo boxes. Further, the display unit may be a touch screen.

In this case, a touch sensor which detects a touch gesture of the user may be included. The touch sensor may be any one of various types such as a capacitive resistive type, a resistive type, or a piezoelectric type. In the case of a capacitive resistive type touch screen, a dielectric material is used for a surface of the touch screen so that when a part of a body of the user touches the surface of the touch screen, a minute electricity which is excited to the body of the user is detected to calculate a touch coordinate. In the case of a resistive type touch screen, two electrode plates are embedded in the touch screen. When a user touches the screen, upper and lower electrode plates in a touched position are in contact with each other to allow the electric current to flow. Therefore, the flowing of electric current is detected to calculate a touch coordinate.

In addition to this, the user equipment 10 supports a pen input function. In this case, a gesture of the user utilizing an input unit such as a pen, instead of the part of the body of the user, may be detected. For example, when the input unit is a stylus pen in which a coil is included, the user equipment 10 may include a magnetic field detecting sensor which sensor a magnetic field which changes by the coil in the stylus pen. In this case, not only the touch gesture of the user, but also approaching gesture of the user, such as hovering may be detected.

Further, the display unit may be implemented by at least one of a liquid crystal display (LCD), a thin film transistor liquid crystal display (TFT LCD), an organic light emitting diode (OLED), a flexible display, a three dimensional display (3D display), an e-ink display, and a light emitting diode (LED) and also include a driving circuit and a back light unit therefor.

Further, the display unit may be configured as a stereoscopic display unit which displays a stereoscopic image.

A 3D display scheme such as a stereoscopic type (a glass type), an auto stereoscopic type (a glassless type), or a projection scheme (a holographic type) may be applied to the stereoscopic display unit.

Further, the display unit displays the temporary virtual card number issued from the payment service providing apparatus 100 or information on the gift certificate, the coupon, or the like by the control of the control unit.

The voice output unit outputs voice information included in a predetermined signal processed signal by the control unit. Here, the voice output unit may include a receiver, a speaker, a buzzer, and the like.

Further, the voice output unit outputs a guide voice generated by the control unit.

Further, the voice output unit outputs the voice information corresponding to the temporary virtual card number issued from the payment service providing apparatus 100 or information on the gift certificate, the coupon, and the like by the control unit.

The communication unit connects an arbitrary internal component with at least one arbitrary external terminal through a wired/wireless communication network to communicate each other. In this case, the arbitrary external terminal may include a network service system and a server.

The control unit performs an overall control function of the user equipment 10 using a program and data stored in the storing unit. The control unit may include a RAM, a ROM, a CPU, a GPU, and a bus and the RAM, the ROM, the CPU, the GPU, and the like are connected to each other through the bus. The CPU accesses the storing unit to perform a booting operation using an operating system (O/S) stored in the storing unit and perform various operations using various programs, contents, data, and the like stored in the storing unit.

Further, the storing unit stores data and programs required to operate the user equipment 10.

That is, the storing unit may store a plurality of application programs (or applications) which are driven in the user equipment 10 and data and commands for operation of the user equipment 10. At least some of the application programs may be downloaded from an external server through wireless communication. Further, at least some of the application programs may be provided on the user equipment 10 since a releasing time in order to support a basic function (for example, phone call receiving and sending functions, message receiving and transmitting functions) of the user equipment 10. In the meantime, the application program is stored in the user equipment storing unit and provided in the user equipment 10 to be driven to perform an operation (or a function) of the user equipment 10 by the user equipment control unit.

Further, the storing unit may include at least one storing medium of a flash memory type, a hard disk type, a multimedia card micro type, a card type memory (for example, an SD or XD memory), a magnetic memory, a magnetic disk, an optical disk, a RAM, an SRAM, a ROM, an EEPROM, and a PROM. Further, the user equipment 10 may operate a web storage which performs a storing function of the user equipment storing unit on the Internet or operate in association with the web storage.

Further, the storing unit stores the temporary virtual card number issued from the payment service providing apparatus 100 or information on the coupon, the point card, the gift certificate or the prepaid card, and the like by the control of the control unit.

Further, the user equipment 10 may further include an interface unit (not illustrated) which functions as an interface with all external apparatuses which are connected to the user equipment 10.

For example, the interface unit may be configured by a wired/wireless headset port, an external charger port, a wired/wireless data port, a memory card port, a port connecting devices with identification modules, an audio input/output (I/O) port, a video input/output (I/O) port, an earphone port, and the like. Here, the identification module is a chip which stores various information for authenticating authorization of the user equipment 10 and may include a user identity module (UIM), a subscriber identity module (SIM), a universal subscriber identity module (USIM), and the like. Further, the device provided with the identification module may be prepared in a smart card form. Accordingly, the identification module may be connected with the user equipment 10 through the port. Such an interface unit receives data or power from an external device to transmit the received data or power to each component in the user equipment 10 or transmit the data in the user equipment 10 to the external device.

Further, the interface unit may be a passage through which the power from a cradle is supplied to the corresponding user equipment 10 when the user equipment 10 is connected to an external cradle or a passage through which various command signals input from the cradle by the user is transferred to the corresponding user equipment 10. Various command signals input from the cradle or the corresponding power may also operate by a signal for recognizing that the user equipment 10 is accurately installed on the cradle.

Further, the user equipment 10 may further include an input unit (not illustrated) for receiving a signal according to a button operation of the user or any function selection or receiving a command or a control signal created by an operation such as an operation of touching/scrolling the displayed screen.

Hereinafter, referring to the above-described configuration, detailed exemplary embodiment of the web based payment service providing system according to an exemplary embodiment of the present invention will be described with reference to the following drawings.

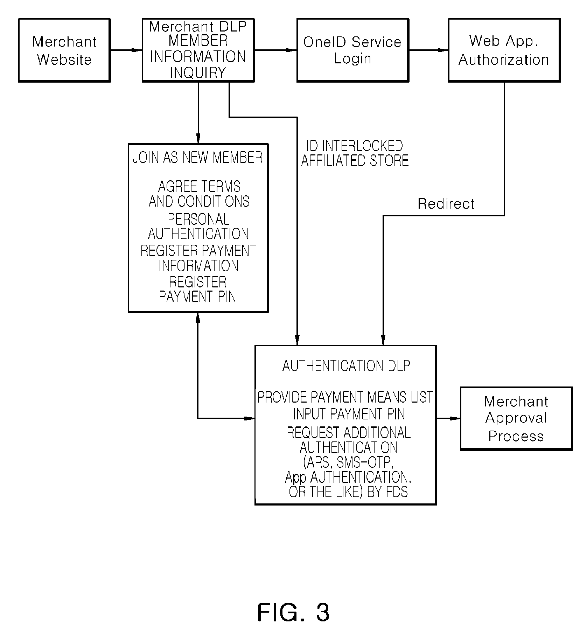

FIG. 3 is a conceptual view illustrating a user member joining procedure according to an exemplary embodiment of the present invention.

Referring to FIG. 3, when a user is an existing member and a web based commercial transaction device (or a web based commercial transaction server) is an ID unlinked affiliating device, the user performs authentication on the web application based on the registered member ID and is redirected to an authentication data loss prevention (DLP) procedure. When the ID interlinks between the web based commercial transaction device and other web based commercial transaction device, the authentication DLP procedure may be performed based on the interlinked ID through a member information inquiring procedure.

During the authentication DLP procedure, a payment means list is provided, the payment PIN is input, and additional authentication (automatic response system (ARS), short message service (SMS) - one time password (OTP), and app authentication) may be performed by a fraud detection system (FDS).

When the user is not an existing member, a new member joining procedure may be performed by agreement to terms and conditions, personal authentication, payment information registration, payment PIN registration, setting information registration, and the like.

When the authentication is completed through the authentication DLP procedure, the approval procedure may be performed.

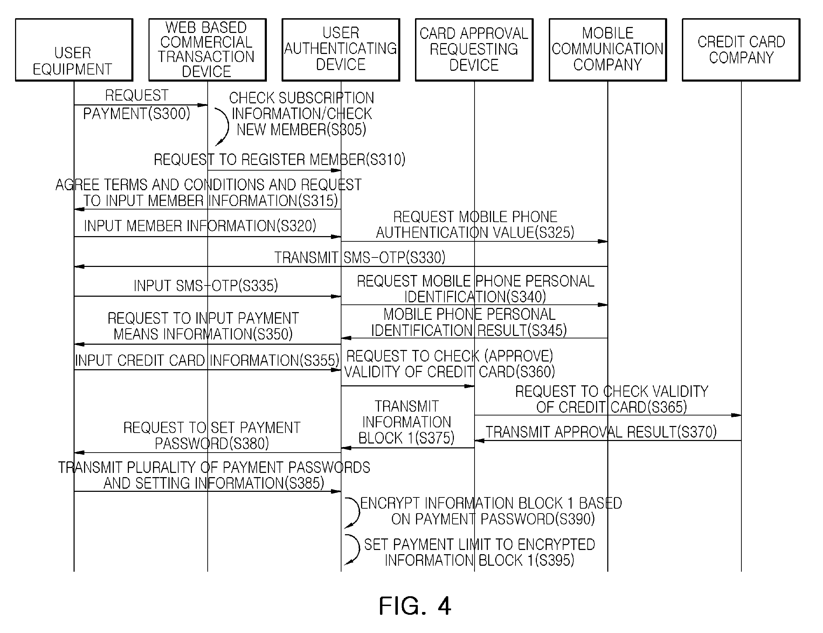

FIG. 4 is a flowchart illustrating a user member joining procedure according to an exemplary embodiment of the present invention.

The user authenticating device may receive authentication payment service joining request and member information from the user and perform the personal authentication of the user through a mobile communication company. Further, after performing the personal authentication, the user may register respectively one or more payment cards (a card number and a card authentication value (CAV)) such as a credit card or a check card through a user authenticating device and a card approval requesting device. Further, validity of each payment means is confirmed and the information for payment is encrypted to be stored in the user authenticating device and card approval requesting device, respectively.

According to the exemplary embodiment of the present invention, a member account may be registered by various personal authenticating methods in accordance with a property of the payment means (for example, including the credit card and the check card) of the member. Both a member verification method by a non-financial company and a member verification method by a financial company are performed on all member accounts to perform member verification.

Referring to FIG. 4, the user may request the payment to the web based commercial transaction device (for example, a server which operates a web site of a representative franchise) (step S300).

The user may select simple payment in accordance with a web based payment service method according to the exemplary embodiment of the present invention as a payment method through the web based commercial transaction device and request the simple payment.

The web based commercial transaction device inquires member joining records of the user and may check whether the user is a new member (step S305). The web based commercial transaction device may determine whether the user who requests the simple payment is a member who is already allowed to perform the simple payment procedure based on a member database. When a joining record of the user is included in the member database, it may be determined that the user may perform the simple payment procedure. In contrast, when the joining record of the user is not included in the member database, it may be determined that the user is not allowed to perform the simple payment procedure but the user needs to newly join as a member for the simple payment procedure. Hereinafter, an exemplary embodiment will be described by assuming that the user needs to newly join as a member for a simple payment procedure.

The web based commercial transaction device may request the user authenticating device to perform a new member registering procedure for a simple payment procedure (step S310). The user authenticating device authenticates validity of the web based commercial transaction device which requests the new member registering procedure and may output a screen for agreement to terms and conditions and a member information input screen to a separate web page to transmit the web page to the user equipment.

The user equipment inputs the agreement to terms and conditions, member information, a payment PIN for every payment means, and setting information in a simple payment service page to transmit the simple payment service page to the user authenticating device (step S315). The user equipment may input the member information (step S320). The member information may include an e-mail address, a service usage ID/password, and subscription information of user equipment (for example, a portable terminal). The subscription information of the user equipment may include a number of the user equipment required for personal authentication, a name, birth date, a gender, and nationality.

The user authenticating device may transmit the personal authentication information of the user equipment received from the user to the mobile communication company through a mobile phone personal identification service agency (a credit rating agency) (step S325).

The mobile communication company may transmit an SMS authentication number to the user equipment based on the personal authentication information of the user equipment received from the personal identification service agency (step S330).

The user equipment may transmit the received SMS authentication number to the user authenticating device (step S335).

The user authenticating device transmits the received SMS authentication number to the mobile communication company through the personal identification service agency to request the authentication of the user (step S340).

The mobile communication company may transmit a result (for example, CI/DI) of performing the user identification based on the SMS authentication number received from the user authenticating device to the user authenticating device through the personal identification service agency (step S345).

The user authenticating device may request the user to input information on the payment means through the user equipment (step S350). The user authenticating device notifies important information together with user environment information such as screen keyboard, an anti-virus program and may request the confirmation of the notice from the user.

The user equipment may input information for every payment means. The user equipment may transmit the card information for every payment means to the user authenticating device (step S355). The card information which is transmitted to the user authenticating device through the user equipment may be encrypted by the encryption key provided from the card approval requesting device to be transmitted.

The user authenticating device may transmit card information of the user which is encrypted and transmitted to the card approval requesting device (step S360).

The card approval requesting device decodes card information of the user which is encrypted and transmitted and may transmit an approval request message to the credit card company server corresponding to the card information for every card information (step S365).

The credit card company server may check validity of the card information of the user through an approval system and transmit the approval result to the card approval requesting device (step S370).

The card approval requesting device may encrypt the card number and the card authentication value included in the card information of the payment means based on the card approval result. For example, the card number is encrypted based on the HSM to be stored in the card approval requesting device. The card approval requesting device generates a card ID for every payment means to store the card number and the card ID in order to discern the card number corresponding to the payment means.

Further, the card authentication value (expiration date, first two digits of a credit card secret code, and birth date) corresponding to each payment means may be divided into two information, that is, an information block 1 and an information block 2, by the card approval requesting device. The information block 1 may be transmitted to the user authenticating device which is physically isolated (step S375). After transmitting the information block 1 to the user authenticating device, the information block 1 may be deleted from the card approval requesting device. As described above, the card approval requesting device may access the information block 2 based on the information block 1 transmitted from the user authenticating device.

As described above, the information block 1 may be encrypted and stored in the user authenticating device based on the payment PIN input by the user.

The user authenticating device may request the payment PIN to the user equipment (step S380).

Further, the user authenticating device may receive the information block 1 corresponding to the payment means from the card approval requesting device.

In this case, the user authenticating device receives the card ID matching to the information block 1 from the card approval requesting device and matches the information block 1 and the card ID for every payment means to store the information block 1 and the card ID.

Further, the user authenticating device may request the payment PIN for every payment means to the user equipment in order to encrypt and store the information block 1 based on the payment PIN input by the user (step S380).

The user equipment encrypts the payment PIN to transmit the encrypted payment PIN to the user authenticating device (step S385).

In this case, the user equipment generates a plurality of payment PINs to set a plurality of different payment limits in accordance with user input and generates setting information for the payment limits corresponding to the payment PINs to transmit the payment PINs and setting information to the user authenticating device.

Therefore, the user authenticating device encrypts the information block 1 based on each payment PIN to generate a plurality of different encrypted information blocks 1 (step S390). Further, the user authenticating device may set a payment limit corresponding to the payment PIN used to encrypt the information block 1 which is encrypted based on the setting information (step S395).

In this case, after completing encryption and completely setting payment limits, the user authenticating device may delete the information block 1 before being encrypted and the setting information.

Further, the user authenticating device may request the signature information of the user which is used to authenticate the payment, together with the payment PIN (step S380), and the user equipment generates signature information to transmit the signature information to the user authenticating device. Here, the user equipment encrypts the corresponding signature information to transmit the encrypted signature information to the user authenticating device (step S385).

Therefore, the user authenticating device encrypts the information block 1 based on the payment PIN to generate a plurality of different encrypted information blocks 1 and matches the signature information, which is received together with the payment PIN, to the member information together with the encrypted information block 1 to store them in the database.

In this case, after completing the encryption, the user authenticating device may delete the information block 1 before being encrypted.

Further, the user authenticating device mutually compares the payment PINs which are received for every payment means from the user equipment to determine whether there is the same payment PIN. When there is the same payment PIN, the user authenticating device may transmit notice information notifying to change any one of the plurality of payment PINs which is equal to each other to the user equipment.

By doing this, the user authenticating device may induce to set different payment PINs for every payment means.

Thereafter, the user authenticating device encrypts the information block 1 correspondingly to each payment means based on the payment PIN to generate a plurality of different encrypted information blocks 1 and matches the encrypted information block 1 to the corresponding card ID to store the encrypted information block 1 in the database.

Further, the user authenticating device decodes the payment PIN and encrypt the information block 1 based on the decoded payment PIN to generate an encrypted information block 1.

In this case, after completing the encryption, the user authenticating device may delete the information block 1 before being encrypted.

By doing this, the user authenticating device may match the information block 1 which is encrypted for every payment means to the card ID to store the encrypted information block 1.

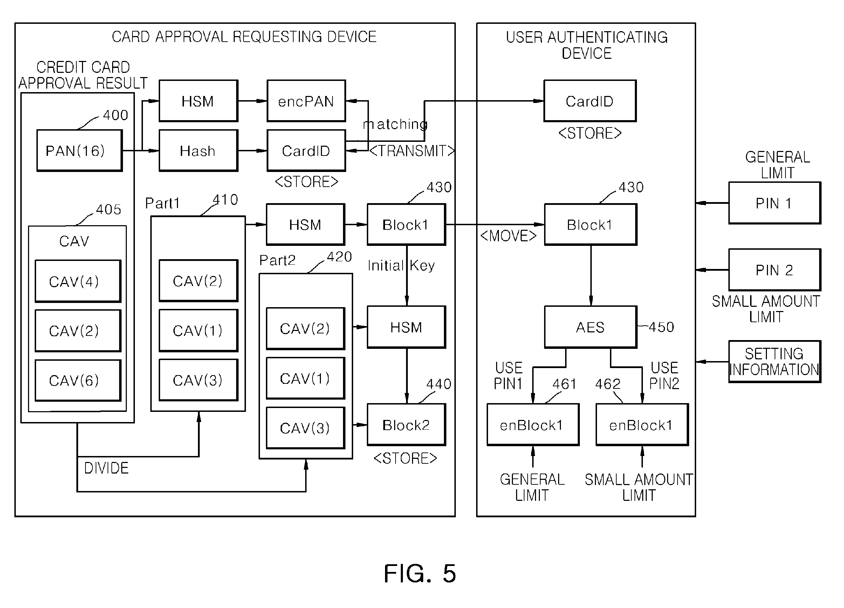

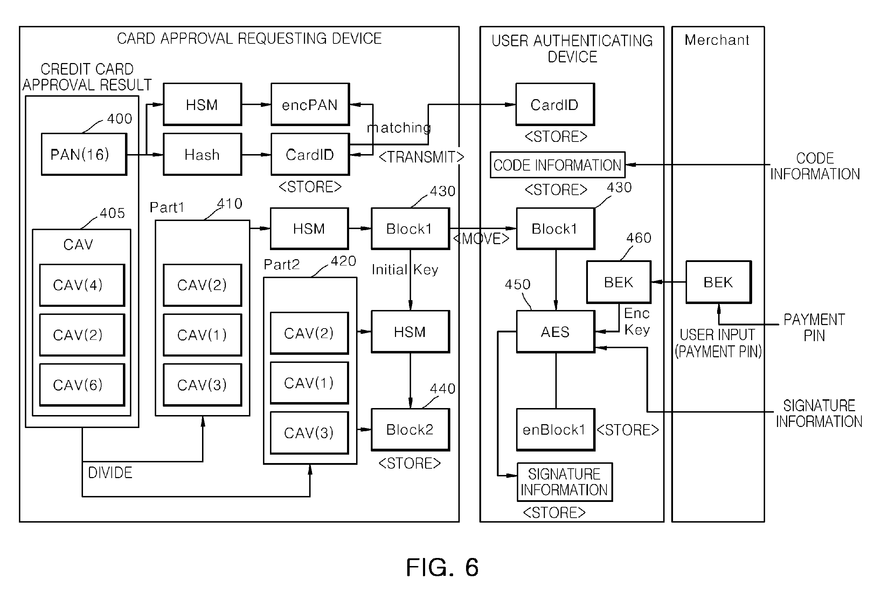

FIGS. 5 and 6 are conceptual views of an operation of a method for encrypting a card number and a card authentication value for every payment means and a method for automatically selecting a payment means in accordance with a payment PIN reception from user equipment in a card approval requesting device and a user authenticating device according to an exemplary embodiment of the present invention.

Referring to FIGS. 5 and 6, a primary account number (PAN) 400 of each payment means may be encrypted based on the HSM and Hash. The encrypted PAN information matches to the card ID to be stored in the card approval requesting device.

Further, the card approval requesting device transmits the card ID to the user authenticating device and the user authenticating device may store the card ID.

A card authentication value (CAV) 405 of the payment means may be divided into a part 1 410 and a part 2 420 by the card approval requesting device. The CAV information corresponding to the part 1 410 is encrypted based on the HSM to be generated as an information block 1 430 to be transmitted to the user authenticating device. The part 2 420 may be generated as the information block 2 440 which is encrypted based on the HSM using the information block 1 430 as an initial encryption value.

In the meantime, when the information block 1 430 is received from the card approval requesting device, the user authenticating device requests the payment PIN to be used for the payment to the user equipment. Further, as illustrated in the drawing, the user authenticating device may encrypt the divided information blocks 1 430 based on the AES 450 using the payment PIN received from the user equipment as an encryption key.

In this case, the user authenticating device may use a block encryption key (BEK) 460 to encrypt the information block 1 430 based on the AES 450. The BEK 460 may be a key which is generated based on the payment PIN input from the user equipment.

Further, the web based commercial transaction device generates the BEK 460 based on the payment PIN in accordance with the user input to transmit the BEK 460 to the user authenticating device.

Further, the user authenticating device may receive a plurality of payment PINs corresponding to different amounts of payment limit (hereinafter, payment limits) from the user equipment and receive setting information for payment limits to be set correspondingly to each payment PIN from the user equipment.

For example, as illustrated in FIG. 5, the user authenticating device receives setting information in which a payment PIN 1 corresponding to a general payment limit (a total limit, a onetime payment limit, a daily payment limit, and the like), a payment PIN 2 corresponding to a small amount payment limit (a payment limit which is set to be lower than the general payment limit), and different payment limits corresponding to the payment PIN 1 and the payment PIN 2 are set from the user equipment. The user authenticating device encrypts the information block 1 using the payment PIN 1 based on the AES 450 to generate a first encrypted information block 1 461 and encrypts the information block 1 using the payment PIN 2 based on the AES 450 to generate a second encrypted information block 1 462.

Further, the user authenticating device may set a general payment limit for the first encrypted information block 1 461 generated through the payment PIN 1 based on the setting information and set a small amount payment limit for the second encrypted information block 1 462 generated through the payment PIN 2.

Therefore, the user authenticating device encrypts the information block 1 using each payment PIN to generate and store different encrypted information blocks 1 461 and 462. Further, the user authenticating device may set a payment limit corresponding to the payment PIN used to encrypt the information blocks 1 461 and 462 which are encrypted based on the setting information.

With the above-described configuration, when the user equipment which already sets the payment PIN wants to change the already set payment PIN and payment limit, the user authenticating device generates an encrypted information block 1 corresponding to the plurality of payment PINs which is changed by repeating the above-described configuration after performing the personal authentication by interlocking the personal identification service agency and the mobile communication company through a communication network and sets and stores the payment limit for the encrypted information block 1 and may delete the plurality of existing encrypted information blocks 1.

By doing this, the user may easily change the payment PIN and the payment limit.

Further, as illustrated in FIG. 6, the user authenticating device requests signature information to be used for the payment from the user equipment and receives and may store the signature information from the user equipment. In this case, when the signature information received from the user equipment is encrypted, the user authenticating device may decode the encrypted signature information and encrypt the signature information based on the AES 450 through the temporarily generated encryption key or the BEK 460 to store the encrypted signature information.

Moreover, the user authenticating device may receive and store code information on the coupon, the point card, the gift certificate, the prepaid card, and the like from the user equipment. In this case, the user authenticating device may encrypt the code information based on the AES 450 through the encryption key which is temporarily generated to store the encrypted code information.

In this case, the user authenticating device may receive affiliated store information on an issuing agent, which issues the code information, from the user equipment together with the code information on the coupon, the point card, the gift certificate, the prepaid card, and the like, and authenticate and encrypt the code information by interlocking with an affiliated store server corresponding to the affiliated store information through the communication network and store the code information.

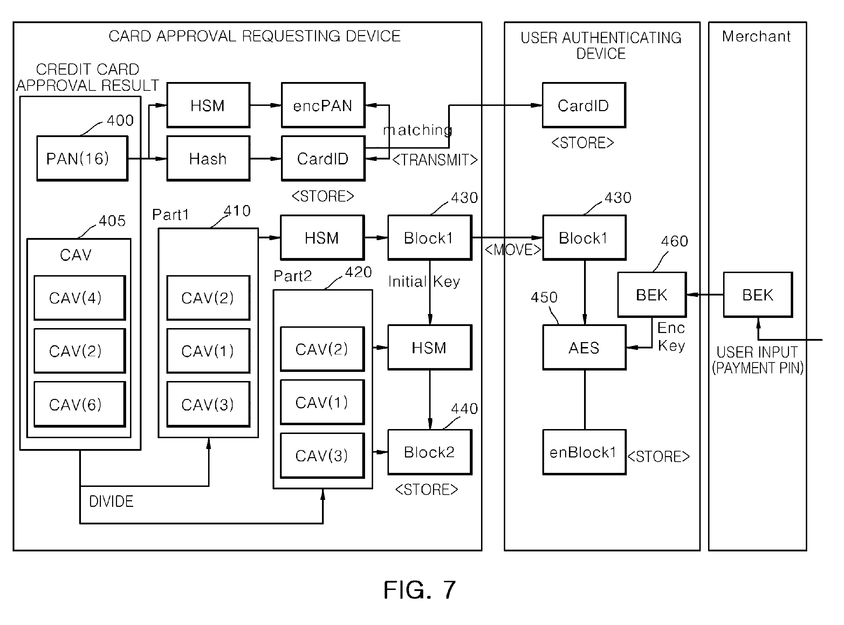

With the above-described configuration, as illustrated in FIG. 7, the card approval requesting device matches the card ID which is generated for every payment means registered by the user to the information block 1 to transmit the card ID and the information block 1 to the user authenticating device. The user authenticating device encrypts the information block 1 based on the payment PIN which is received for each payment means from the user equipment and matches the encrypted information block 1 to the corresponding card ID to store the encrypted information block 1 and the card ID.

Further, the user authenticating device encrypts the card ID and the information block 1 for each payment means together with the payment PIN to generate and store encrypted payment means information.

By doing this, the user authenticating device may store the card ID and the encrypted information block 1 which matches to the card ID correspondingly to the payment means.

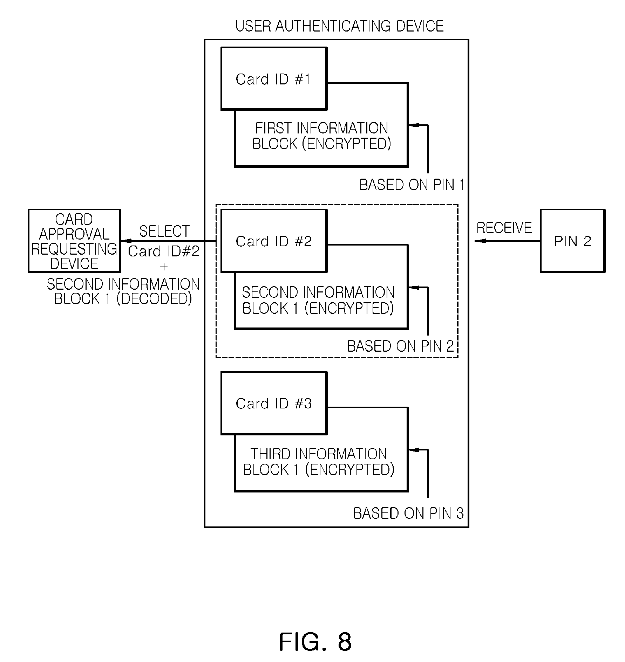

In this case, as illustrated in FIG. 8, when the commercial transaction is generated through the web based commercial transaction device by the user, the user authenticating device receives the payment information from the web based commercial transaction device. When the payment information is received, the user authenticating device may request the payment PIN for using the payment in accordance with the payment information to the user equipment.

Therefore, the user authenticating device may decode any one of the previously stored encrypted information blocks 1 corresponding to each payment means based on the payment PIN received from the user equipment.

Further, the user authenticating device extracts the stored card ID which matches to the decoded information block 1 to automatically select the payment means, transmits the extracted card ID and the decoded information block 1 to the card approval requesting device. In this case, the user authenticating device transmits the payment information received from the web based commercial transaction device together to the card approval requesting device to perform the payment process in accordance with the payment information using the automatically selected payment means.

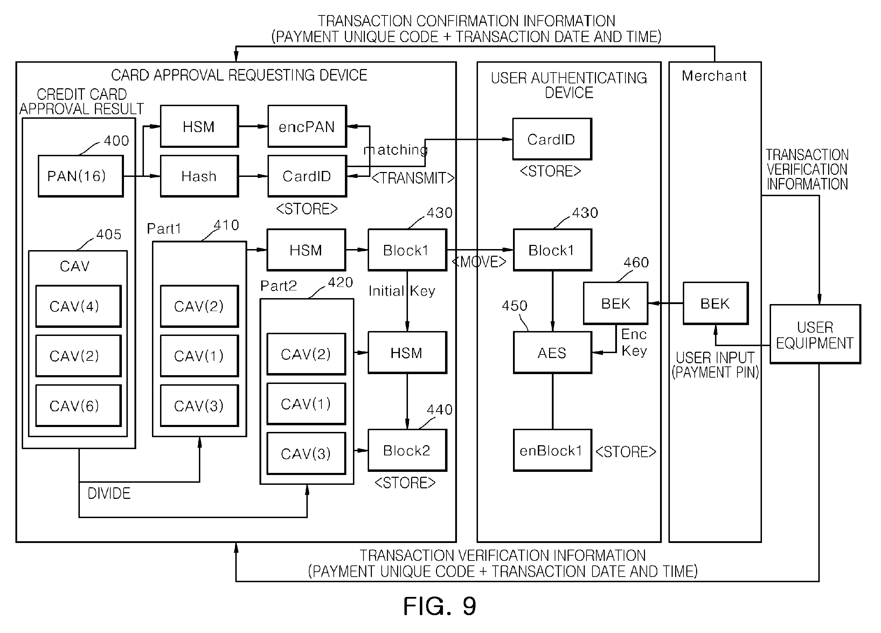

With the above-described configuration, as illustrated in FIG. 9, the card approval requesting device matches the card ID which is generated correspondingly to the credit card registered by the user to the information block 1 to transmit the card ID and the information block 1 to the user authenticating device. The user authenticating device encrypts the information block 1 based on the payment PIN which is received from the user equipment and matches the encrypted information block 1 to the corresponding card ID to store the encrypted information block 1 and the card ID.

By doing this, the user authenticating device may store the card ID and the encrypted information block 1 which matches to the card ID correspondingly to the credit card of the user.

Thereafter, when the commercial transaction is generated through the web based commercial transaction device by the user, the user authenticating device receives the payment information from the web based commercial transaction device. When the payment information is received, the user authenticating device may request the payment PIN for using the payment in accordance with the payment information to the user equipment.

Therefore, the user authenticating device may decode the encrypted information block 1 based on the payment PIN received from the user equipment.

Further, the user authenticating device extracts the stored card ID which matches to the decoded information block 1 to automatically select the payment means of the user, transmits the extracted card ID and the decoded information block 1 to the card approval requesting device. In this case, the user authenticating device transmits the payment information received from the web based commercial transaction device together to the card approval requesting device to perform the payment process in accordance with the payment information using the automatically selected payment means.

With the above-described configuration, when the payment information corresponding to the commercial transaction is generated in accordance with the generation of the commercial transaction by the user, the web based commercial transaction device generates a payment unique code corresponding to the commercial transaction of the user and transaction confirmation information for transaction date and time, and forms a one-way communication channel with the card approval requesting device to transmit the transaction confirmation information to the card approval requesting device.

In this case, the transaction confirmation information may include identification information of the user equipment which is possessed by the user corresponding to the commercial transaction. In this case, the identification information of the user equipment includes a mobile directory number (MDN), a mobile IP, a mobile MAC, a subscriber identify module (Sim) card unique information, a serial number, a user ID, and the like.

Further, in order to prove the commercial transaction of the user when the commercial transaction is generated by the user, the web based commercial transaction device issues (generates) transaction verification information including the same information as the transaction confirmation information which is transmitted to the card approval requesting device to transmit the transaction verification information to the user equipment.

Therefore, the user equipment also forms a one-way communication channel with the card approval requesting device to transmit the transaction verification information to the card approval requesting device through the communication channel.

Therefore, the card approval requesting device receives and stores the transaction confirmation information from the web based commercial transaction device. When the card approval requesting device receives the transaction verification information from the user equipment, the card approval requesting device compares the transaction confirmation information which is stored in advance with the received transaction verification information and when the transaction confirmation information and the transaction verification information match to each other, may determine that the normal transaction is generated by the user.

Thereafter, when it is determined that the normal transaction is generated, the card approval requesting device decodes the information block 2 440 based on the information block 1 430 received from the user authenticating device and decodes the credit card related information (the credit card authentication value or the credit card number) based on the decoded information block 1 430 and information block 2 440 to generate an approval message to be transmitted to the credit card company server using the payment information and the credit card related information which are received from the user authenticating device together with the information block 1 430 and transmit the approval message, thereby performing the payment processing.

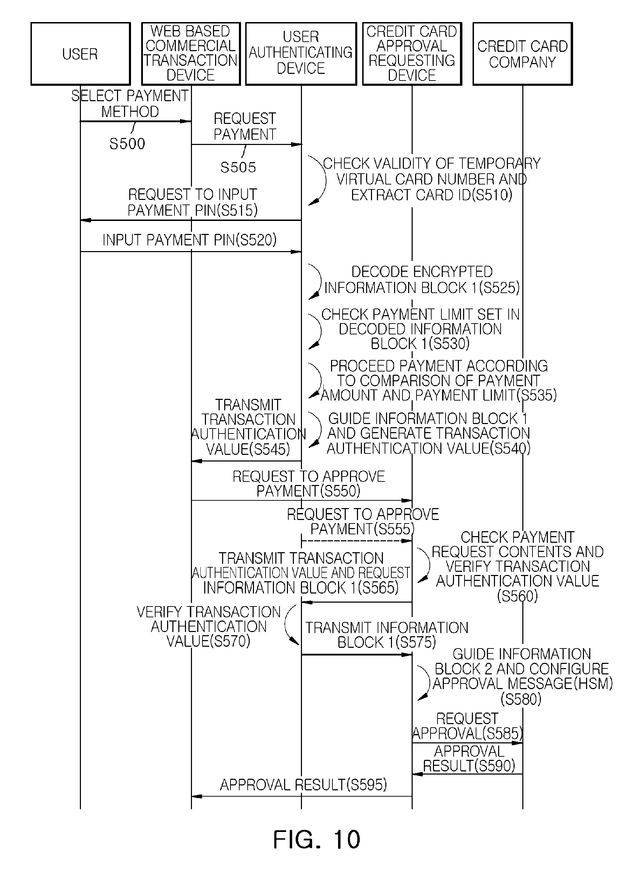

FIG. 10 is a flowchart illustrating a payment procedure in accordance with input of a payment PIN of the payment service providing apparatus according to a first exemplary embodiment of the present invention when a web based commercial transaction is generated by a user.

Referring to FIG. 10, when the user selects a simple payment procedure according to an exemplary embodiment of the present invention (step S1000), the web based commercial transaction device may request the payment to the user authenticating device (step S1005). The web based commercial transaction device transmits payment information including a temporary virtual card number selected by the user and payment statements (items, an affiliated store name, an amount, transaction date and time, and the like) to the user authenticating device to proceed a transaction authentication request.

The user authenticating device may check whether the temporary virtual card number arrives within a transaction effective time. Further, the user authenticating device may inquire information on the card ID of the user based on the temporary virtual card number to obtain information on the card ID of the user (step S1010).

For example, the user authenticating device decodes the temporary virtual card number and may inquire and extract information on the card ID corresponding to the decoded temporary virtual card number.

The user authenticating device may request the user equipment to input the information on the payment PIN which is previously set (step S1015). The user authenticating device may provide a screen for requesting to input the payment PIN to the user equipment. On the screen for requesting to input the payment PIN, notice information indicating that a screen keyboard is applied and an anti-virus vaccine program is used for the purpose of security of the payment PIN to be input may be provided.

The user may input the payment PIN through the user equipment (step S1020).

In this case, the user may input any one of a plurality of payment PINs which is previously set to select a payment limit.

The user authenticating device checks the payment statement (items, an affiliated store name, an amount, transaction date and time, and the like) and may decode any one of a plurality of encrypted information blocks 1 which is encrypted and stored in advance with the payment PIN received from the user equipment (step S1025).

Further, the user authenticating device may check the payment limit which is set correspondingly to the encrypted information block 1 which is decoded by the payment PIN (step S1030).

In this case, the user authenticating device identifies a limit identifier which is assigned to the encrypted information block 1 to be decoded and may also check the payment limit which matches to the limit identifier based on the matching information.

Thereafter, the user authenticating device may determine whether to make a payment depending on whether the checked payment limit exceeds a payment amount in accordance with the payment information received from the web based commercial transaction device (step S1035).

That is, when the payment amount exceeds the payment limit, the user authenticating device determines that the payment is unavailable to transmit information indicating that the payment approval is not allowed to the web based commercial transaction device and the web based commercial transaction device may notify the user equipment that the payment is unavailable.

In this case, the user authenticating device may transmit the information indicating that the payment approval is not allowed to the user equipment first, prior to the web based commercial transaction device and also request the user equipment to re-input the payment PIN corresponding to a payment limit which is equal to or higher than the payment amount.

Further, when it is determined that the payment amount is within the payment limit so that payment is available, the user authenticating device may transmit the decoded information block 1 to the credit card approval requesting device.

Prior to this, when it is determined that the payment is available, the user authenticating device may generate a transaction interlocked one-time authentication value (a transaction authentication value) to suppress the transaction counterfeit by the affiliated store before transmitting the information block 1 to the credit card approval requesting device (step S1040).

The user authenticating device may transmit the transaction interlocked one-time authentication value to the web based commercial transaction device (step S1045).

The web based commercial transaction device transmits the payment statement, the temporary virtual card number, and the transaction interlocked one-time authentication value to the card approval requesting device to request the payment approval (step S1050).

Here, instead of steps S1040 to S1050, next to step S1035, the user authenticating device may directly request the payment approval to the card approval requesting device after successfully performing the personal authentication (step S1055).

In the meantime, the card approval requesting device directly generates the transaction interlocked one-time authentication value through the payment statement and the member information and may compare the directly generated transaction interlocked one-time authentication value with the transaction interlocked one-time authentication value which is received from the web based commercial transaction device (step S1060). It is possible to verify whether the payment statement received from the web based commercial transaction device is counterfeited based on the comparison procedure.

The card approval requesting device may transmit the transaction interlocked one-time authentication value to the user authenticating device and request the information block 1 (step S1065).

The user authenticating device verifies the transaction interlocked one-time authentication value (step S1070) and when the transaction interlocked one-time authentication value is verified, may transmit the information block 1 to the card approval requesting device (step S1075).

Further, the user authenticating device may transmit the card ID extracted through the temporary virtual card number to the card approval requesting device together with the information block 1.

In this case, it should be understood that the user authenticating device and the card approval requesting device may transmit or receive the information block 1 and the card ID without generating and verifying the above-described transaction interlocked one-time authentication value.

The card approval requesting device may decode the information block 2 based on the information block 1 received from the user authenticating device and decode the credit card authentication value which is encrypted based on the decoded information block 1 and information block 2.

Further, the card approval requesting device may decode the encrypted credit card number corresponding to the card ID received from the user authenticating device.

Therefore, the card approval requesting device generates approval request information based on the decoded credit card authentication value and the credit card number to transmit the approval request information to the credit card company (step S1080). For example, the approval request information may be an approval message generated through the hardware security module (HSM) based on the information block 1, the information block 2, and the credit card number.

In this case, the card approval requesting device may receive the payment information which is provided by the web based commercial transaction device from the user authenticating device and generate approval request information (approval message) based on the payment information, the above-described credit card authentication value, and the credit card number.

The card approval requesting device may transmit the approval request information to the credit card company server (step S1085) and the credit card company server receives the approval request information and may transmit the approval result to the card approval requesting device (step S1090). The card approval requesting device may transmit the approval result to the web base commercial transaction device (step S1095).

Based on the above-described configuration, the payment service providing apparatus according to the exemplary embodiment of the present invention may complete the payment processing and support to perform the payment within a payment limit desired by the user.

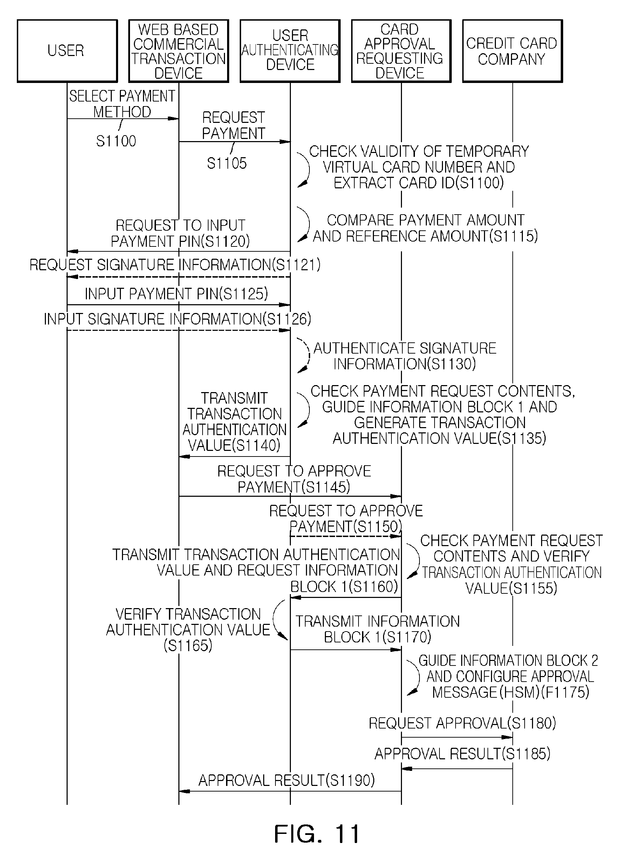

FIG. 11 is a flowchart illustrating a payment procedure of the payment service providing apparatus according to a second exemplary embodiment of the present invention when a web based commercial transaction is generated by a user.

Referring to FIG. 11, when the user selects a simple payment procedure according to an exemplary embodiment of the present invention (step S1100), the web based commercial transaction device may request the payment to the user authenticating device (step S1105). The web based commercial transaction device transmits payment information including a payment means selected by the user and payment statements (items, an affiliated store name, an amount, transaction date and time, and the like) to the user authenticating device to proceed a transaction authentication request.

When the payment means in accordance with the payment information is a temporary virtual card number, the user authenticating device may check whether the temporary virtual card number arrives within a transaction effective time. Further, the user authenticating device inquires information on the card ID of the user based on the temporary virtual card number to obtain information on the card ID of the user (step S1110).

For example, the user authenticating device decodes the temporary virtual card number and inquires and may extract information on the card ID corresponding to the decoded temporary virtual card number.

In the meantime, the user authenticating device determines whether the payment amount in accordance with the payment information exceeds a predetermined reference amount based on different authentication methods which are set in advance in accordance with the type of payment means and the reference amount and when the payment amount exceeds the predetermined reference amount (step S1115), the user authenticating device may request information on the payment PIN which is previously set and signature information to the user equipment (steps S1120 and S1121).

In this case, the user authenticating device may also request the information on the payment PIN and the signature information to the web based commercial transaction device.

Further, the user authenticating device may provide an interface related screen for inputting the payment PIN and the signature information to the user equipment or the web based commercial transaction device. On the screen, guidance information indicating that a screen keyboard is applied and an anti-virus vaccine program is used for the purpose of security of the payment PIN to be input and the signature information may be provided.

The user may input the payment PIN and the signature information through the user equipment or the web based commercial transaction device and the user equipment or the web based commercial transaction device may transmit the payment PIN and the signature information to the user authenticating device (steps S1125 and S1126).

In this case, the web based commercial transaction device may be connected to a touch pad terminal to receive the signature information of the user and receive the signature information and the payment PIN of the user through the touch pad terminal to transmit the signature information and the payment PIN to the user authenticating device.

In the meantime, the user authenticating device compares the signature information received from the user equipment and the web based commercial transaction device with the signature information which matches to the member information of the user to be stored to perform the authentication process. When images of the received signature information and the previously stored signature information in accordance with a predetermined algorithm are compared and a similarity thoseof is equal to or higher than a predetermined reference value, the user authenticating device determines that the authentication is successfully performed to authenticate the user (step S1130).

In this case, when the previously stored signature information is already encrypted, the user authenticating device decodes the signature information to compare the signature information with signature information received from the user equipment and may decode the encrypted signature information based on a decoding key or the payment PIN.

In the meantime, when authentication based on the signature information fails, the user authenticating device may provide information for re-inputting the signature to the user equipment or the web based commercial transaction device.

When the authentication through the above-described authentication process is successfully performed, the user authenticating device may decode the encrypted information block 1 which is already encrypted to be stored with the payment PIN received from the user equipment (step S1135).

Thereafter, the user authenticating device may transmit the decoded information block 1 to the card approval requesting device (step S1170).

In this case, prior to step S1170, the user authenticating device may generate a transaction interlocked one-time authentication value (a transaction authentication value) to suppress the transaction counterfeit by the affiliated store before transmitting the information block 1 to the card approval requesting device (step S1135).

The user authenticating device may transmit the transaction interlocked one-time authentication value to the web based commercial transaction device (step S1140).

The web based commercial transaction device transmits the payment statement, the temporary virtual card number, and the transaction interlocked one-time authentication value to the card approval requesting device to request the payment approval (step S1145).

Here, instead of steps S1135 to S1145, next to step S1145, the user authenticating device may directly request the payment approval to the card approval requesting device after decoding the information block 1 and successfully performing the personal authentication (step S1150).

In the meantime, the card approval requesting device directly generates the transaction interlocked one-time authentication value through the payment statement and the member information and compares the directly generated transaction interlocked one-time authentication value with the transaction interlocked one-time authentication value which is received from the web based commercial transaction device (step S1155). It is verified whether the payment statement received from the web based commercial transaction device is counterfeited based on the comparison procedure.

The card approval requesting device transmits the transaction interlocked one-time authentication value to the user authenticating device and may request the information block 1 (step S1160).

The user authenticating device verifies the transaction interlocked one-time authentication value (step S1165) and when the transaction interlocked one-time authentication value is verified, may transmit the information block 1 to the card approval requesting device (step S1170).

Further, the user authenticating device may transmit the card ID extracted through the temporary virtual card number to the card approval requesting device together with the information block 1.

In this case, it should be understood that the user authenticating device and the card approval requesting device may transmit or receive the information block 1 and the card ID without generating and verifying the above-described transaction interlocked one-time authentication value.

The card approval requesting device decodes the information block 2 based on the information block 1 received from the user authenticating device and may decode the encrypted card authentication value based on the decoded information block 1 and information block 2. Further, the card approval requesting device may decode the encrypted card number corresponding to the card ID received from the user authenticating device (step S1175).

Therefore, the card approval requesting device generates approval request information based on the decoded card authentication value and the card number (step S1175) to transmit the approval request information to the credit card company (step S1180). For example, the approval request information may be an approval message generated through the hardware security module (HSM) based on the information block 1, the information block 2, and the card number.

In this case, the card approval requesting device receives the payment information which is provided by the web based commercial transaction device from the user authenticating device and may generate approval request information (approval message) based on the payment information, the above-described credit card authentication value, and the credit card number.

The card approval requesting device transmits the approval request information to the credit card company server (step S1180) and the credit card company server receives the approval request information and may transmit the approval result to the card approval requesting device (step S1185). The card approval requesting device may transmit the approval result to the web base commercial transaction device (step S1190).

Based on the above-described configuration, the payment service providing apparatus according to an exemplary embodiment of the present invention completes the payment processing.

In the meantime, in the above-described step S1110, when the payment amount is equal to or smaller than the reference amount (step S1115) depending on whether the payment means according to the payment information is a temporary virtual card number and a payment amount according to the payment information exceeds a predetermined reference amount, the user authenticating device may request only information on the payment PIN which is previously set to the user equipment or the web based commercial transaction device based on different authenticating methods which are set in advance according to the type of the payment means and the reference amount (step S1120).

Therefore, the user authenticating device receives the information on the payment PIN from the user equipment or the web based commercial transaction device (step S1125) and omits an authentication process (step S1130) based on the signature information to process the payment of the payment information indicating that the payment means is a credit card or a check card and the payment amount is equal to or lower than a reference amount according to different authenticating methods which are set in advance in accordance with the type of payment means and the reference amount, and may decode the encrypted information block 1 using the payment PIN (step S1135).

Thereafter, the user authenticating device and the card approval requesting device performs the above-described steps S1140 to S1190 to complete the payment processing.

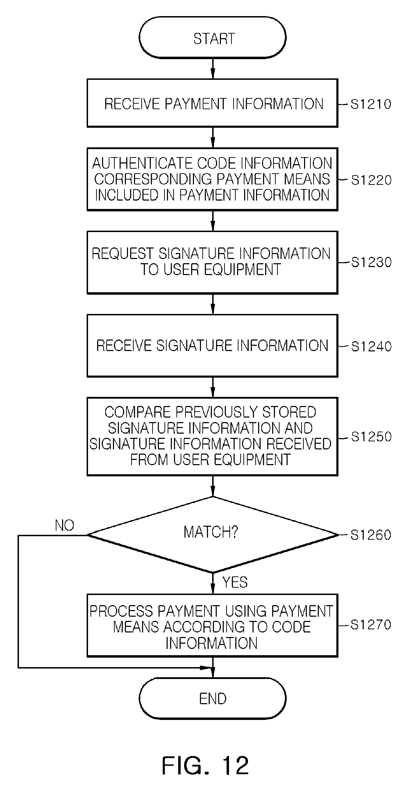

In the meantime, as illustrated in FIG. 12, when the payment means in accordance with the payment information includes code information on the coupon, the point card, the gift certificate, the prepaid card, or the like, rather than the temporary virtual card number (step S1210), the user authenticating device decodes the code information which is encrypted and stored by matching to the member information of the user and compares the decoded code information with code information according to the payment information and may authenticate the code information according to the payment information when the both code information matches to each other (step S1220).

Thereafter, the user authenticating device may request the signature information of the user to the user equipment or the web based commercial transaction device to perform the payment processing in accordance with the payment information using authenticated code information (step S1230).

Therefore, when the signature information is received from the user equipment (step S1240), the user authenticating device compares the signature information with a previously stored signature information (step S1250). When the signature information match to each other through the above-described authenticating process (step S1260), the user authenticating device directly processes the payment according to the payment information using the code information and may update and store the code information which is used for payment processing of the payment information (step S1270).

In the meantime, in the above configuration, when the payment processing is completed by interlocking with the card approval requesting device or the payment processing is directly completed, the user authenticating device may generate payment processing result information including the payment information and transmit the payment processing result information to the web based commercial transaction device or the user equipment.

In this case, the payment processing result information may be configured by an electronic receipt and the signature information which is input by the user for payment processing may be attached to the payment processing result information.

Further, the user authenticating device may store and manage the payment processing result information as a payment log.

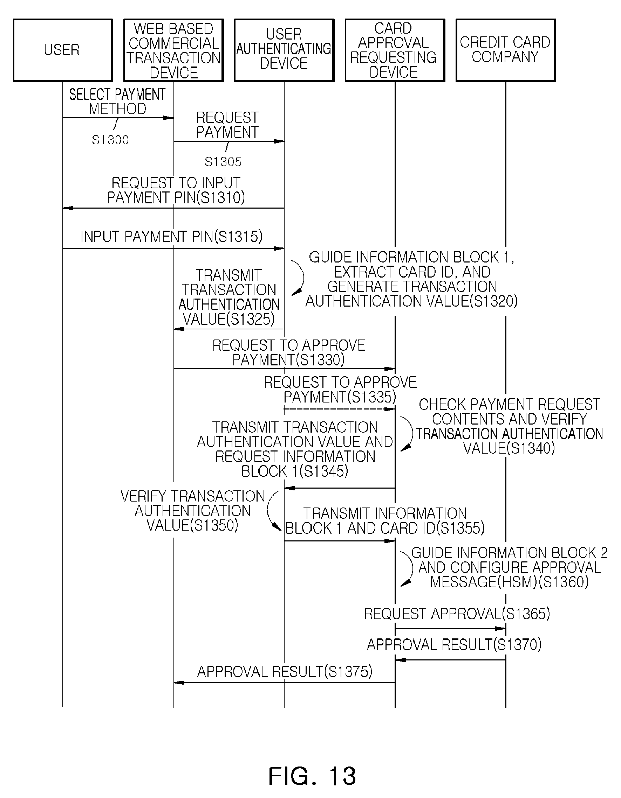

FIG. 13 is a flowchart illustrating a payment procedure in accordance with input of a payment PIN of the payment service providing apparatus according to a third exemplary embodiment of the present invention when a web based commercial transaction is generated by a user.

Referring to FIG. 13, when the user selects a simple payment procedure according to an exemplary embodiment of the present invention (step S1300), the web based commercial transaction device may request the payment to the user authenticating device (step S1305). The web based commercial transaction device transmits payment information including payment statements (items, an affiliated store name, an amount, transaction date and time, and the like) to the user authenticating device to proceed a transaction authentication request.

The user authenticating device may request the payment PIN to the user equipment or the web based commercial transaction device when the payment information is received (step S1310) and receive the payment PIN input by the user from the user equipment or the web based commercial transaction device (step S1315).

In this case, the user authenticating device may provide an interface related screen for inputting the payment PIN and the signature information to the user equipment or the web based commercial transaction device. On the screen, guidance information indicating that a screen keyboard is applied and an anti-virus vaccine program is used for the purpose of security of the payment PIN to be input may be provided.

The user may input the payment PIN through the user equipment or the web based commercial transaction device and the user equipment or the web based commercial transaction device may transmit the payment PIN in accordance with the user input to the user authenticating device.

When the payment PIN is received, the user authenticating device decodes any one of encrypted information blocks 1 which are previously encrypted to be stored for every payment means with the payment PIN received from the user equipment and may discern the decoded information block 1, simultaneously. Further, the user authenticating device may extract the card ID which matches to the discerned information block 1 (step S1320).

Thereafter, the user authenticating device may transmit the decoded information block 1 and the extracted card ID to the card approval requesting device (step S1355).

In this case, when the information block 1 and the card ID are present as an encrypted payment means information based on the payment PIN, the user authenticating device extracts the information block 1 and the card ID from the payment means information which is decoded with the payment PIN received from the user equipment to select the payment means and may also transmit the information block 1 and the card ID extracted correspondingly to the selected selection payment means to the card approval requesting device.

By doing this, the user authenticating device may automatically select a payment means to be used for the payment among one or more payment means which are registered by the user, only by the payment PIN and transmit the decoded information block 1 and the extracted card ID corresponding to the selected selection payment means to the card approval requesting device.

In this case, prior to step S1355, the user authenticating device may generate a transaction interlocked one-time authentication value (a transaction authentication value) to suppress the transaction counterfeit by the affiliated store before transmitting the information block 1 to the card approval requesting device (step S1320).

The user authenticating device may transmit the transaction interlocked one-time authentication value to the web based commercial transaction device (step S1325).

The web based commercial transaction device transmits the payment statement and the transaction interlocked one-time authentication value to the card approval requesting device to request the payment approval (step S1330).

Here, instead of steps S1320 to S1330, the user authenticating device directly transmits the decoded information block 1 corresponding to the selection payment means, the extracted card ID, and the payment information to the card approval requesting device to request the payment approval, after successfully performing the personal authentication (step S1335).

In the meantime, the card approval requesting device directly generates the transaction interlocked one-time authentication value through the payment statement, the member information, and the like, and may compare the directly generated transaction interlocked one-time authentication value with the transaction interlocked one-time authentication value which is received from the web based commercial transaction device (step S1340). It is verified whether the payment statement received from the web based commercial transaction device is counterfeited based on the comparison procedure.

The card approval requesting device transmits the transaction interlocked one-time authentication value to the user authenticating device and may request the information block 1 and the card ID (step S1345).

The user authenticating device verifies the transaction interlocked one-time authentication value (step S1350) and when the transaction interlocked one-time authentication value is verified, may transmit the decoded information block 1 and the extracted card ID to the card approval requesting device (step S1355).

In this case, it should be understood that the user authenticating device and the card approval requesting device may transmit or receive the information block 1 corresponding to the selection payment means and the card ID without generating and verifying the above-described transaction interlocked one-time authentication value.

The card approval requesting device decodes the information block 2 based on the information block 1 received from the user authenticating device and may decode the encrypted card authentication value based on the decoded information block 1 and information block 2. Further, the card approval requesting device may decode the encrypted card number corresponding to the card ID received from the user authenticating device (step S1360).

Therefore, the card approval requesting device generates credit approval request information based on the card authentication value decoded correspondingly to the selection payment means and the card number (step S1360) to transmit the approval request information to the credit card company (step S1365). For example, the approval request information may be an approval message generated through the hardware security module (HSM) based on the information block 1, the information block 2, and the card number.

In this case, the card approval requesting device may receive the information block 1 and the card ID corresponding to the selection payment means and the payment information from the user authenticating device and generate the above-described credit approval request information based on the card authentication value and the card number corresponding to the selection payment means, and the payment information.

The card approval requesting device may transmit the approval request information to the credit card company server (step S1365) and the credit card company server receive the approval request information and transmit the approval result to the card approval requesting device (step S1370). The card approval requesting device may transmit the approval result to the web base commercial transaction device (step S1375).

Based on the above-described configuration, the payment service providing apparatus according to the exemplary embodiment of the present invention completes the payment processing.

As described above, the payment service providing apparatus according to the exemplary embodiment of the present invention may automatically select payment means which is desired by the user to be used for payment, among a plurality of payment means which is registered by the user only by the payment PIN input by the user, thereby minimizing the user input during the payment, to significantly improve payment convenience of the user.

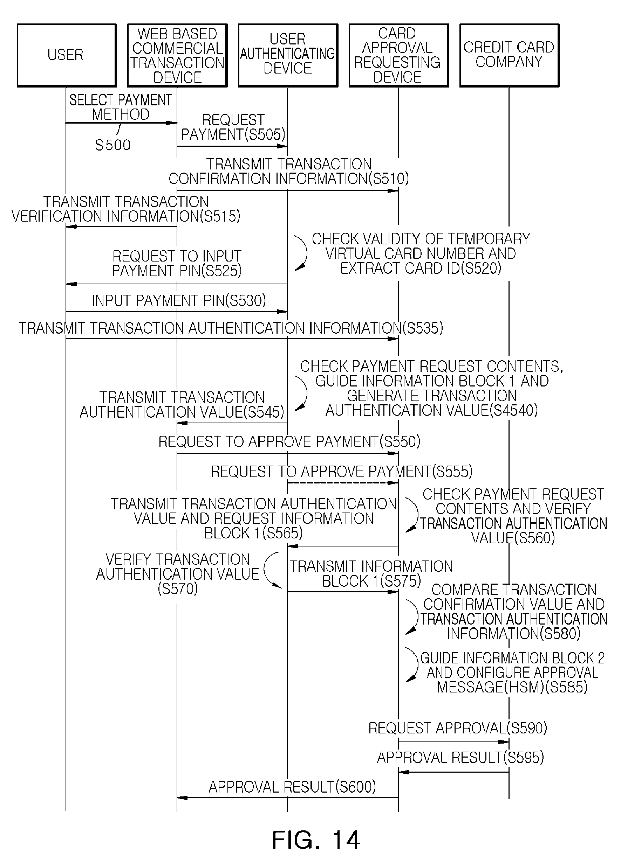

FIG. 14 is a flowchart illustrating a payment procedure in accordance with input of a payment PIN of the payment service providing apparatus according to the fourth exemplary embodiment of the present invention when a web based commercial transaction is generated by a user.

Referring to FIG. 14, when the user selects a simple payment procedure according to an exemplary embodiment of the present invention (step S1400), the web based commercial transaction device may request the payment to the user authenticating device (step S1405). The web based commercial transaction device transmits a temporary virtual card number selected by the user and payment information including payment statements (items, an affiliated store name, an amount, transaction date and time, and the like) to the user authenticating device to proceed a transaction authentication request.

In this case, when the payment is requested, the web based commercial transaction device forms one-way communication channel with the card approval requesting device and generates a payment unique code corresponding to the payment statement of the user and generates transaction confirmation information including the transaction date and time and the payment unique code corresponding to the payment statements to transmit the transaction confirmation information to the card approval requesting device (step S1410). In this case, the transaction confirmation information may include identification information of the user equipment corresponding to the user.

Further, the web based commercial transaction device issues the transaction verification information including the same information as the transaction confirmation information corresponding to the user and may transmit the transaction verification information to the user equipment (step S1415).

In the meantime, the user authenticating device receives the payment information in accordance with the payment request from the user equipment and may check whether the temporary virtual card number included in the payment information arrives within the transaction effective time. Further, the user authenticating device inquires information on the card ID of the user based on the temporary virtual card number to obtain information on the card ID of the user (step S1420).

For example, the user authenticating device decodes the temporary virtual card number and may inquire and extract information on the card ID corresponding to the decoded temporary virtual card number.

The user authenticating device may request the user equipment to input the information on the payment PIN which is set in advance (step S1425). The user authenticating device may provide a screen for requesting to input the payment PIN to the user equipment. On the screen for requesting to input the payment PIN, notice information indicating that a screen keyboard is applied and an anti-virus vaccine program is used for the purpose of security of the payment PIN to be input may be provided.

The user may input the payment PIN through the user equipment (step S1430).

By doing this, the user equipment may transmit the payment PIN to the user authenticating device, form a one-way communication channel with the card approval requesting device at the time of transmitting the payment PIN and transmit the transaction verification information issued from the web based commercial transaction device to the card approval requesting device (step S1435).

In the meantime, the user authenticating device checks the payment statement (items, an affiliated store name, an amount, transaction date and time, and the like) and may decode the encrypted information block 1 which is encrypted and stored in advance with the payment PIN received from the user equipment (step S1440).

Further, the user authenticating device may transmit the decoded information block 1 to the credit card approval requesting device (step S1475).

In this case, the user authenticating device may generate a transaction interlocked one-time authentication value (a transaction authentication value) to suppress the transaction counterfeit by the affiliated store before transmitting the information block 1 to the credit card approval requesting device (step S1440).

The user authenticating device may transmit the transaction interlocked one-time authentication value to the web based commercial transaction device (step S1445).

The web based commercial transaction device transmits the payment statement, the temporary virtual card number, and the transaction interlocked one-time authentication value to the card approval requesting device to request the payment approval (step S1450).

Here, instead of steps S1440 to S1450, the user authenticating device directly transmits the decoded information block 1, the extracted card ID, and the payment information to the card approval requesting device to request the payment approval, after successfully performing the personal authentication (step S1455).

In the meantime, the card approval requesting device directly generates the transaction interlocked one-time authentication value through the payment statement and the member information and may compare the directly generated transaction interlocked one-time authentication value with the transaction interlocked one-time authentication value which is received from the web based commercial transaction device (step S1460). It is verified whether the payment statement received from the web based commercial transaction device is counterfeited based on the comparison procedure.

The card approval requesting device transmits the transaction interlocked one-time authentication value to the user authenticating device and may request the information block 1 (step S1465).

The user authenticating device verifies the transaction interlocked one-time authentication value (step S1470) and when the transaction interlocked one-time authentication value is verified, may transmit the information block 1 to the card approval requesting device (step S1475).

Further, the card authenticating device may transmit the card ID extracted through the temporary virtual card number to the card approval requesting device together with the information block 1.

In this case, it should be understood that the user authenticating device and the card approval requesting device may transmit or receive the information block 1 and the card ID without generating and verifying the above-described transaction interlocked one-time authentication value.

In the meantime, the card approval requesting device compares the transaction confirmation information which is received from the web based commercial transaction device to be stored and the transaction verification information received from the user equipment to determine whether the transaction confirmation information and the transaction verification information match (step S1480) and when the transaction confirmation information and the transaction verification information match as a result of determination, decodes the information block 2 based on the information block 1 received from the user authenticating device and may also decode the credit card authentication value encrypted based on the decoded information block 1 and information block 2 after checking that there are a normal transaction and transaction (step S1485).

Further, the card approval requesting device may decode the encrypted credit card number corresponding to the card ID received from the user authenticating device.

Therefore, the card approval requesting device generates approval request information based on the decoded credit card authentication value and the credit card number to transmit the approval request information to the credit card company (step S1485). For example, the approval request information may be an approval message generated through the hardware security module (HSM) based on the information block 1, the information block 2, and the credit card number.

In this case, the card approval requesting device may receive the payment information which is provided by the web based commercial transaction device from the user authenticating device and generate approval request information (approval message) based on the payment information, the above-described credit card authentication value, and the credit card number.

The card approval requesting device may transmit the approval request information to the credit card company server (step S1490) and the credit card company server receives the approval request information and may transmit the approval result to the card approval requesting device (step S1495). The card approval requesting device may transmit the approval result to the web base commercial transaction device (step S1500).

Based on the above-described configuration, the payment service providing apparatus according to an exemplary embodiment of the present invention completes the payment processing and confirms that the transaction is generated by the user based on the information received from the user equipment and the web based commercial transaction device to proceed the payment procedure. Therefore, even though the user authenticating device is hacked to leak the payment PIN so that the payment PIN disguising the payment is input, it is possible to easily distinguish the disguising payment to prevent the abnormal transaction.

Further, the card approval requesting device according to the exemplary embodiment of the present invention forms a one-way communication channel only for receiving information from the user equipment and the web based commercial transaction device so that internal information is not transmitted to the outside. Therefore, it is possible to easily prevent the security threat, thereby enhancing the security.

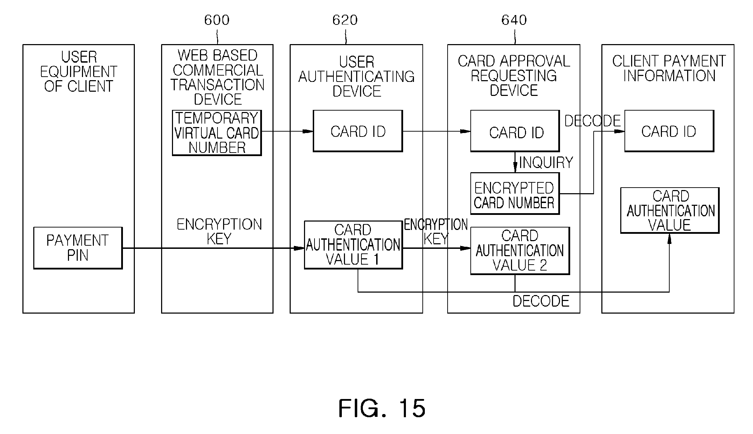

FIG. 15 is a conceptual view illustrating a payment procedure in accordance with payment PIN input according to an exemplary embodiment of the present invention.

Referring to FIG. 15, the web based commercial transaction device 600 transmits a temporary virtual card number selected by the user and payment information including payment statements (items, an affiliated store name, an amount, transaction date and time, and the like) to the user authenticating device 620 to proceed a transaction authentication request.

Further, the web based commercial transaction device 600 transmits a temporary virtual card number selected by the user and payment information including payment statements (items, an affiliated store name, an amount, transaction date and time, and the like) on a product which the user wants to buy to the user authenticating device 620 to proceed a transaction authentication request.

The user authenticating device 620 inquires information on the card ID of the user based on the temporary virtual card number to obtain information on the card ID of the user. The information on the card ID of the user may be transmitted to the card approval requesting device 640. The card approval requesting device 640 inquires the credit card number which is encrypted based on the information on the card ID and decodes the encrypted credit card number to be used as the payment information of the client.

The encrypted credit card number is decoded in the card approval requesting device 640 based on the information block 2 which is decoded based on the information block 1 received from the user authenticating device 620 or based on the HSM.

The user authenticating device 620 may request the user equipment to input information on the payment PIN set at the time of joining as a member. The user may input the payment PIN corresponding to a desired payment limit through the user equipment.

When the payment information is received, the user authenticating device 620 may request the user equipment to input information on the payment PIN set at the time of joining as a member.

The user authenticating device 620 may decode the information block 1 which is encrypted by the payment PIN corresponding to the payment limit desired by the user among the plurality of encrypted information blocks 1 which is encrypted and stored at the time of joining as a member, through the payment PIN received from the user equipment.

Further, the user authenticating device 620 may decode the encrypted information block which is encrypted and stored at the time of joining as a member through the payment PIN received from the user equipment.

The user authenticating device 620 may decode any one of the encrypted information blocks 1 which are encrypted and stored for every payment means at the time of joining as a member through the payment PIN received from the user equipment and inquire and extract the card ID which matches to the decoded payment PIN to automatically select the payment means.

Further, the user authenticating device 620 compares the payment limit set to correspondingly to the decoded information block 1 and the payment amount according to the payment information and when the payment amount is within the payment limit, determines that the payment is available to proceed the subsequent procedure.

The card approval requesting device 640 transmits the transaction authentication value to the user authenticating device 620 to request the information block 1. The user authenticating device 620 verifies the transaction authentication value and when the transaction authentication value is verified and the payment is available through the comparison of the payment limit and the payment amount, may transmit the decoded information block 1 to the card approval requesting device 640.

The card approval requesting device 640 transmits the transaction authentication value to the user authenticating device 620 to request the information block 1. The user authenticating device 620 verifies the transaction authentication value and may transmit the decoded information block 1 to the card approval requesting device 640.

The card approval requesting device 640 may decode the information block 1 based on the encrypted information block 1 received from the user authenticating device 620. The card approval requesting device 640 may generate the credit card authentication value based on the decoded information block 1 and information block 2.

By doing this, the card approval requesting device 640 generates approval request information based on the card authentication value and the card number to transmit the approval request information to the credit card company server.

In this case, the card approval requesting device 640 receives the payment information provided by the web based commercial transaction device 600 from the user authenticating device 620 together with the information block 1 and may generate the approval request information (approval message) based on the payment information, the above-described credit card authentication value, and the credit card number.

Further, the card approval requesting device 640 inquiries and extracts the encrypted card number based on the card ID which is received together with the decoded information block 1 and may decode the extracted encrypted card number.

By doing this, the card approval requesting device 640 may extract the card authentication value and the card number corresponding to the selectin payment means and generates approval request information based on the card authentication value and the card number to transmit the approval request information to the credit card company server.

In this case, the card approval requesting device 640 receives the payment information from the user authenticating device 620 together with the above-described decoded information block 1 and the extracted card ID and may generate approval request information based on the card authentication value, the card number, and the payment information corresponding to the selection payment means.

The card approval requesting device 640 may transmit the approval request information to the credit card company server and the credit card company server receives the approval request information and may transmit the approval result to the card approval requesting device. The card approval requesting device 640 may transmit the approval result to the web base commercial transaction device. In this case, the approval result may be the above-described payment processing result information.

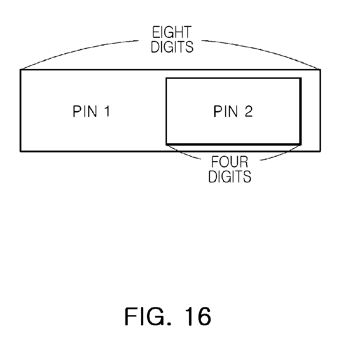

With the above-described configuration, the payment service providing apparatus supports the user to set different complexity of the payment PIN corresponding to different payment limits so that a payment PIN with high complexity is set for the highest payment limit to be high and a payment PIN with low complexity is set for a small amount payment limit. Therefore, a security of the payment PIN having a high payment limit is enhanced and payment convenience is provided through a payment PIN for a low payment limit, which will be described with reference to FIG. 16.

As described above, the user authenticating device included in the payment service providing apparatus uses a code having some of digits selected by the user equipment, among a plurality of digits which configures the payment PIN information having the highest payment limit based on the setting information received from the user equipment as a different payment PIN information corresponding to a payment limit which is different from that of the payment PIN information.

For example, as illustrated in the drawing, when PIN 2 which is different payment PIN information corresponding a part (four digits) among a plurality of digits (eight digits) which configures PIN 1 which is payment PIN information is input, only small amount payment is allowed and when the entire PIN 1 (eight digits) is input, a payment with a general limit is allowed.

By doing this, in the plurality of payment PINs which is configured to be different from each other, PIN information for a general limit is more complex and PIN information for a small amount limit is simpler. If necessary, a PIN for a general limit may be configured to include the PIN for the small amount limit. Therefore, the small amount payment is configured to input a part of the PIN for a general limit in order to reduce the number of times of inputting the PIN.

In the above-described configuration, the payment service providing apparatus verifies the commercial transaction generated by the user by interlocking with the web based commercial transaction device and the user equipment and then may decode the information block 2 based on the information block 1.

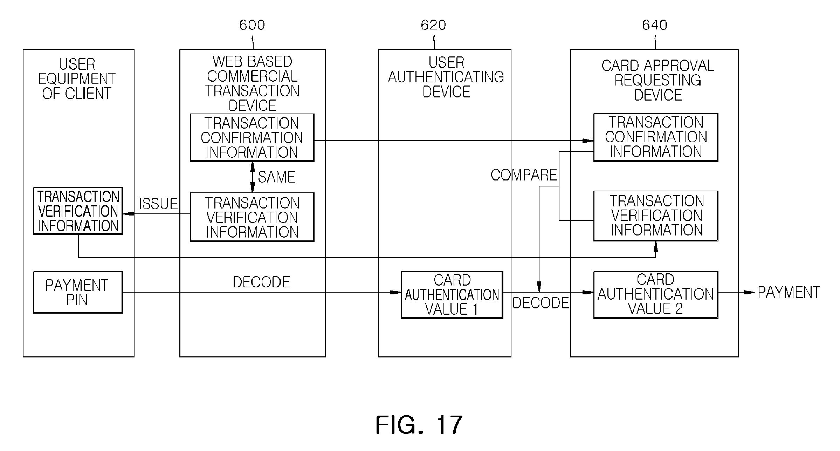

This will be described with reference to a conceptual view illustrated in FIG. 17. When the user selects a simple payment procedure according to an exemplary embodiment of the present invention, the web based commercial transaction device 600 may request the payment to the user authenticating device 620. The web based commercial transaction device 600 transmits a temporary virtual card number selected by the user and payment information including payment statements (items, an affiliated store name, an amount, transaction date and time, and the like) to the user authenticating device 620 to proceed a transaction authentication request.

In this case, when the payment is requested, the web based commercial transaction device 600 forms one-way communication channel with the card approval requesting device 640 and generates a payment unique code corresponding to the payment statement of the user and generates transaction confirmation information including the transaction date and time and the payment unique code corresponding to the payment statements to transmit the transaction confirmation information to the card approval requesting device 640. In this case, the transaction confirmation information may include identification information of the user equipment corresponding to the user.

Further, the web based commercial transaction device 600 issues the transaction verification information including the same information as the transaction confirmation information corresponding to the user and may transmit the transaction verification information to the user equipment.

In the meantime, the card approval requesting device 640 compares the transaction confirmation information which is received from the web based commercial transaction device 600 to be stored and the transaction verification information received from the user equipment to determine whether the transaction confirmation information and the transaction verification information match and when the transaction confirmation information and the transaction verification information match as a result of determination, may confirm that there are a normal transaction and a transaction.

Therefore, when it is determined to be a normal transaction in which an actual transaction is performed, the card approval requesting device 640 decodes the information block 2 based on the information block 1 decoded by the payment PIN of the user equipment from the user authenticating device 620 and may decode the encrypted credit card authentication value based on the decoded information block 1 and information block 2.

Further, the card approval requesting device 640 may decode the encrypted credit card number corresponding to the card ID received from the user authenticating device 620.

Therefore, the card approval requesting device 640 generates approval request information based on the decoded credit card authentication value and credit card number to transmit the approval request information to the credit card company to proceed the subsequent procedure of the above-described payment processing.

The user equipment, the payment service providing apparatus, a web based commercial transaction device, and various servers which have been described above may be implemented by a hardware component, a software component, and/or a combination of the hardware component and the software component.

Further, the components described in the exemplary embodiments, for example, may be implemented using one or more general purpose computers or specific purpose computers together with a processor, a controller, an arithmetic logic computer (ALU), a digital signal processor, a microcomputer, a field programmable array (FPA), a programmable logic unit (PLU), a microprocessor, or any other devices which execute and response instructions.

The user equipment, the payment service providing apparatus, a web based commercial transaction device, and various servers may execute an operating system (OS) and one or more software applications which are performed on the operating system. Further, the user equipment, the payment service providing apparatus, a web based commercial transaction device, and various servers may access, store, manipulate, process, and also generate data in response to the execution of the software.

For the convenience of understanding, it is described that one component is used, respectively. However, those skilled in the art may understand that the processing device may include a plurality of processing elements and/or multiple types of processing elements.

For example, the user equipment, the payment service providing apparatus, a web based commercial transaction device, and various servers may include a plurality of processors or one processor and one controller. Further, another processing configuration such as a parallel processor may be included.

The software may include a computer program, a code, an instruction, or a combination of one or more of them and desirably operate or independently or collectively command the user equipment, the payment service providing apparatus, a web based commercial transaction device, and various servers.

The software and/or data is interpreted by the user equipment, the payment service providing apparatus, a web based commercial transaction device, and various servers or may be permanently or temporarily embodied in any type of a machine, a component, a physical device, virtual equipment, a computer storage medium or device, or a transmitted signal wave in order to provide a command or data to the user equipment, the payment service providing apparatus, a web based commercial transaction device, and various servers.

The software is distributed on computer systems connected by a network to be stored or executed by a distributed method. The software and data may be stored in one or more non-transitory computer readable storage medium.

The web based payment service providing method according to the embodiment of the present invention which supports to select a plurality of limits may be prepared with a computer program, and codes and code segments configuring the computer program may easily deduced by a computer programmer in the art. Further, the corresponding computer program is stored in a non-transitory computer readable storage medium, and read and executed by the computer or the payment service providing apparatus, the web based commercial transaction device, and the user equipment according to the exemplary embodiment of the present invention to implement the web based payment service providing method which supports to select a plurality of limits.

The non-transitory computer readable storage medium includes a magnetic storage medium, an optical storage medium, and a carrier wave medium. A computer program which implements the web based payment service providing method according to the embodiment of the present invention which supports to select a plurality of limits may be stored and installed in an internal memory of the payment service providing apparatus, the web based commercial transaction device, the user equipment, and the like. Alternatively, an external memory such as a smart card in which a computer program implementing the web based payment service providing method according to the embodiment of the present invention which supports to select a plurality of limits is stored and installed may be mounted in the payment service providing apparatus, the web based commercial transaction device, and the user equipment through an interface.

Various devices and components described in this specification may be implemented by a hardware circuit (for example, a CMOS based logic circuit), a firmware, software, or a combination thereof. For example, the devices and components may be implemented using a transistor, a logic gate, and an electronic circuit in the form of various electrical structures.

Hereinabove, although the present invention is described by specific matters such as concrete components, and the like, embodiments, and drawings, they are provided only for assisting in the entire understanding of the present invention. Therefore, the present invention is not limited to the embodiments. Various modifications and changes may be made by those skilled in the art to which the present invention pertains from this description. Therefore, the spirit of the present invention should not be limited to the above-described embodiments and the following claims as well as all modified equally or equivalently to the claims are intended to fall within the scope and spirit of the invention.

According to the present invention, a web based authenticated payment method for non-face-to-face payment in a web standard environment is provided and different PINs are set according to different payment limits for a single payment means and different limits are applied through the PIN input information. Further, a PIN for a small amount payment limit is set to be simple, so that payment convenience for a small amount is enhanced and exposure of the entire PIN for a general limit which is higher than the small amount payment limit is reduced, so that the security is enhanced. Therefore, the present invention may be widely applied to various online payment or non-face-to-face payment systems.

## Claims

1. A web based payment service providing apparatus, comprising:
a card approval requesting device implemented to encrypt and store a credit card number, encrypts a credit card authentication value to divide the credit card authentication value into an information block 1 and an information block 2, the information block 1 being used to decode the information block 2, transmit the information block 1 to a user authenticating device and delete the information block 1; and
a user authenticating device implemented to receive a plurality of different payment personal identification number (PIN) information and setting information in which payment limits corresponding to each payment PIN information are set, from user equipment, encrypt the information block 1 based on each payment PIN information and store a plurality of encrypted information blocks 1 in which different payment limits generated by setting a payment limit corresponding to payment PIN information used to encrypt based on the setting information are set, request the payment PIN information for generating the information block 1 to the user equipment at the time of receiving payment information for a temporary virtual card number and payment statements from a web based commercial transaction device in which commercial transaction is generated by the user to determine whether the payment is available by comparing a payment limit set in the encrypted information block 1 which is decoded based on the payment PIN information received from the user equipment and a payment amount according to the payment information, and transmit the information block 1 which is decoded based on the payment PIN information received from the user equipment when the payment is available, to the card approval requesting device.

2. The apparatus according to claim 1, wherein the card approval requesting device is implemented to decode the information block 2 based on the information block 1 to decode the encrypted credit card authentication value based on the information block 1 and the information block 2 and decode the encrypted credit card number, generate an approval message to be transmitted to a credit card company based on the credit card authentication value and the credit card number, and transmit the approval message to the credit card company.

3. The apparatus according to claim 2, wherein the credit card number is encrypted based on a hardware security module (HSM) and a hash,
the credit card authentication value is encrypted based on the HSM, and
the information block 1 is encrypted through an advanced encryption standard (AES) based on the payment PIN information in the user authenticating device.

4. The apparatus according to claim 3, wherein the card approval requesting device receives the credit card number and the credit card authentication value from the user equipment through a member joining procedure.

5. The apparatus according to claim 1, wherein when the payment is not available as a result depending on whether the payment is available, the user authenticating device requests another payment PIN information to the user equipment.

6. The apparatus according to claim 1, wherein the user authenticating device uses a code having a part of digits selected in accordance with the selection of the user equipment among a plurality of digits which configures the payment PIN information corresponding to the highest payment limit based on the setting information as another payment PIN information in which a different payment limit is set.

7. A web based payment service providing method, comprising:
encrypting and storing a credit card number and encrypting a credit card authentication value to be divided into an information block 1 and an information block 2 and then transmit the information block 1 to a user authenticating device and delete the information block 1, by means of a card approval requesting device, the information block 1 being used to decode the information block 2;
receiving a plurality of different payment personal identification number (PIN) information and setting information in which a payment limit corresponding to the payment PIN information is set from user equipment, encrypting the information block 1 based on the payment PIN information and setting a payment limit corresponding to the payment PIN information used for encryption based on the setting information, by means of the user authenticating device, to generate and store a plurality of encrypted information block 1 in which different payment limits are set;
requesting payment PIN information for generating the information block 1 to the user equipment at the time of receiving payment information for a temporary virtual card number and payment statements from a web based commercial transaction device in which commercial transaction is generated by the user, by means of the user authenticating device, to determine whether the payment is available by comparing a payment limit set in the encrypted information block 1 which is decoded based on the payment PIN information received from the user equipment and a payment amount according to the payment information, and
transmitting the information block 1 which is decoded based on the payment PIN information received from the user equipment when the payment is available to the card approval requesting device, by means of the user authenticating device.

8. The method according to claim 7, further comprising:
decoding the information block 2 based on the information block 1, by means of the card approval requesting device, to decode the encrypted credit card authentication value based on the information block 1 and the information block 2 and decode the encrypted credit card number; and
generating an approval message to be transmitted to a credit card company based on the decoded credit card authentication value and the credit card number and transmitting the approval message to the credit card company, by means of the card approval requesting device.

9. A non-transitory computer readable storage medium storing a computer program recorded thereon configured to perform the method of claim 7 or 8.

10. A web based payment service providing system, comprising:
user equipment which transmits a credit card number and a credit card authentication value through a member joining procedure;
a web based commercial transaction device which generates and transmits a temporary virtual card number and information on payment statements when commercial transaction is generated by the user equipment; and
a payment service providing apparatus which encrypts and stores a credit card number received from the user equipment and encrypts a credit card authentication value to be divided into an information block 1 and an information block 2, the information block 1 being used to decode the information block 2, and stores different information blocks 1 which are encrypted based on payment personal identification number (PIN) information using a plurality of different payment PIN information received from user equipment, sets different payment limits for encrypted information blocks 1 based on setting information received from the user equipment, requests payment PIN information for generating the information block 1 to the user equipment at the time of receiving payment information for a temporary virtual card number and payment statements from the web based commercial transaction device to determine whether the payment is available by comparing a payment limit set in the encrypted information block 1 which is decoded by the payment PIN information received therethrough and a payment amount according to the payment information, and performs payment by decoding the credit card authentication value encrypted based on the information block 1 decoded based on the payment PIN information received from the user equipment and the information block 2 decoded based on the information block 1 and decoding the encrypted credit card number when the payment is available.
